# EUROPÄISCHE PATENTSCHRIFT

(11) **EP 3 655 189 B1**
(45) Veröffentlichungstag und Bekanntmachung des Hinweises auf die Patenterteilung: **13.12.2023**
(21) Anmeldenummer: 18743003.8
(22) Anmeldetag: 17.07.2018
(51) Int. Cl.: B23D 35/00, B23D 17/00, B23D 29/00, B23D 21/00

(54) **ARBEITSGERÄT ZUM SCHNEIDEN EINES WERKSTÜCKS**
TOOL FOR CUTTING A WORKPIECE
OUTIL POUR DÉCOUPER UNE PIÈCE

(30) Priorität: 17.07.2017 DE 102017116041
(43) Veröffentlichungstag der Anmeldung: 27.05.2020
(73) Patentinhaber: Gustav Klauke GmbH, 42855 Remscheid (DE)
(72) Erfinder: FRENKEN, Egbert, 52525 Heinsberg (DE); LEHR, Andreas, 41468 Neuss (DE)
(74) Vertreter: Müller, Enno
(86) Internationale Anmeldenummer: PCT/EP2018/069365
(87) Internationale Veröffentlichungsnummer: WO 2019/016194

(56) Entgegenhaltungen:
- EP-A1- 0 827 815
- EP-A2- 0 145 456
- EP-A2- 2 447 019
- WO-A1-2005/108026
- WO-A2-2008/002467
- WO-A2-2016/112153
- DE-U1- 9 002 885
- US-A- 3 056 267
- US-A- 3 848 334
- US-A- 3 922 780
- US-A- 4 158 914
- US-A- 5 237 899
- US-A- 5 890 291
- US-B1- 6 230 542

## Beschreibung

### Gebiet der Technik

Die Erfindung betrifft ein Arbeitsgerät nach dem Oberbegriff des Anspruches 1.

### Stand der Technik

Solche Arbeitsgeräte der in Rede stehenden Art sind beispielsweise aus der WO 2016/112153 A2 bekannt. Diese finden bspw. Verwendung zum Schneiden von Rohren, weiter insbesondere Rohre, welche im Hoch- und/oder Tiefbau zur Anwendung kommen. Bevorzugt kommen hierbei elektrisch und/oder hydraulisch wirkende Arbeitsgeräte zum Einsatz.

Weiter ist aus der US 5,890,291 A ein Arbeitsgerät bekannt, bei welcher die von einem Vorschubteil beaufschlagbare Schneide sich im Endzustand eines Schneidvorganges in Schneidrichtung auch noch rückwärtig des Werkstückes erstreckt. Aus der US 5,237,899 A ist ein Arbeitsgerät bekannt, bei welcher ein die Schneide enthaltendes Vorrichtungsteil mit einer gesonderten, gegenüberliegend zu einem Werkstück anzuordnenden Aufnahmekontur zusammenwirkt.

### Zusammenfassung der Erfindung

Im Hinblick auf den vorbeschriebenen Stand der Technik wird eine Aufgabe der Erfindung darin gesehen, ein Arbeitsgerät der in Rede stehenden Art hinsichtlich der Handhabung und des Schneidvorganges weiter zu verbessern. Diese Aufgabe ist beim Gegenstand des Anspruches 1 gelöst, wobei darauf abgestellt ist, dass die Schneide (13) von dem Vorschubteil (14) soweit in einer Schneidrichtung bewegbar ist, dass ein aufgenommenes Werkstück vollständig durchfahrbar ist, und dass ausgehend von einer zufolge des vollständigen Durchfahrens erreichten Stellung der Schneide die Schneide unter Entfernung von dem Vorschubteil aus der Schneidrichtung heraus bewegbar ist, wobei die Schneide mit dem Vorschubteil schwenkverbunden ist, oder mittels eines Halterungsteils das Teil des Halterungsrahmens ist, oder über eine Verbindung über ein Gelenk mit dem Vorschubteil, relativ zu dem Vorschubteil verschwenkbar ist, oder wobei die Schneide unverlierbar über ein flexibles Band oder eine Kette an dem Vorschubteil angebunden ist, wobei die Länge des Bandes oder der Kette die Entnahme der Schneide ermöglicht.

Eine solche Ausgestaltung erweist sich insbesondere von Vorteil bei Arbeiten mit dem Arbeitsgerät in schwer zugänglichen Bereichen, weiter bspw. im Tiefbau. Die Schneide muss nach vollständiger Durchführung eines Schneidvorganges und entsprechendem Trennen eines Werkstückes unter Nutzung des Arbeitsgerätes nicht zwingend, wie üblich, unter Durchsetzen des Werkstückes zurückverlagert werden. Vielmehr kann die nach Vollendung des Schneidvorganges durch das Werkstück vollständig hindurchgefahrene Schneide in eine Stellung bewegt werden, die eine handhabungsgünstige Entfernung des Arbeitsgeräts aus dem Arbeitsbereich ermöglicht. Dabei kann die Schneide eine Stellung relativ zu dem Vorschubteil einnehmen, in welcher die Schneide zumindest mit einem Teilbereich zu dem Vorschubteil distanziert ist, unter Verlagerung der Schneide in eine Richtung, die bevorzugt nicht oder nicht in Gänze der Schneidrichtung entspricht. Die Verlagerung kann dabei in einer linearen Richtung und/oder bspw. entlang einer Kurve gegeben sein. Die Distanzierung kann sich dabei allein auf Zusammenwirkungsbereiche von Schneide und Vorschubteil beziehen, über welche Zusammenwirkungsbereiche die Verlagerung der Schneide über das Vorschubteil im Zuge eines Schneidvorgangs erreicht ist.

Es ergibt sich zufolge dieser Ausgestaltung ein günstiger Schneidvorgang, so insbesondere bei Werkstücken, wie bspw. Rohren, insbesondere verhältnismäßig leicht verformbaren Rohren.

Der Arbeitskopf ist im Bereich der Aufnahmekontur in bevorzugter Ausgestaltung allein zur Abstützung des Werkstücks ausgebildet, formt entsprechend in einer bevorzugten Ausgestaltung keine Gegenschneide aus.

Das freie Öffnungsmaß der Aufnahmekontur ergibt sich insbesondere in der Stellung, in der zumindest der freie Endbereich der die Aufnahmekontur aufweisenden Backe, gegebenenfalls aber auch der hierzu distanzierte Bereich, die Mittellängsachse berührt. Das Öffnungsmaß ist in diesem Fall bevorzugt entlang der Mittellängsachse oder entlang einer Parallelen hierzu gemessen.

Das beschriebene Zurückversetzungsmaß ergibt sich bevorzugt in einer Stellung, in welcher die die Aufnahmekontur aufweisende Backe mit ihrem freien, der anderen Backe bevorzugt zugewandten Ende die Mittellängsachse berührt. Senkrecht zu dieser Achse betrachtet ergibt sich das Zurückversetzungsmaß als Abstand der Mittellängsachse (bzw. der das freie Öffnungsmaß definierenden Linie) zu dem Bereich oder Punkt der Aufnahmekontur, die von dem Vorsprungbereich der anderen Backe im Zuge der Verschwenkung als erstes berührt wird. Dies muss nicht die Stellung sein, in der das freie Ende der einen Backe die Mittelängsachse berührt. Vielmehr kann es auch eine darüber hinaus gehende Schwenkstellung sein.

Das Zurückversetzungsmaß kann einem Drittel oder mehr, bspw. bis hin zu der Hälfte oder zwei Drittel oder mehr des Öffnungsmaßes entsprechen. Auch kann das Zurückversetzungsmaß einem Zehntel oder mehr, bspw. bis hin zu der Hälfte oder zwei Drittel oder mehr des Verlagerungsweges des Vorsprungbereiches entlang einer Kreislinie entsprechen.

Das die Schneide in Schneidrichtung beaufschlagende Vorschubteil kann, wie bevorzugt, in dem Arbeitskopf angeordnet und gegebenenfalls geführt sein. In einer Weiterbildung kann das Vorschubteil unverlierbar in dem Arbeitskopf gehaltert und/ oder geführt sein.

Die Schneide kann relativ zu dem Vorschubteil um eine senkrecht zu der Schneidrichtung verlaufende Achse schwenkbar sein. Die Schneide kann entsprechend ausgehend von einer dem vollständigen Hindurchfahren entsprechenden Stellung relativ zu dem Vorschubteil verschwenkt werden, so dass diese in eine zu dem Werkstück und dem Vorschubteil zumindest teilweise distanzierte Stellung schwenkverlagert werden kann, dies bei einer ggf. vorteilhaften unverlierbaren Halterung der Schneide an dem Arbeitsgerät über die Gelenkausbildung. Auch kann das Gelenk so ausgebildet sein, dass die Schneide nach erfolgtem Abschwenken aus dem Arbeitskopf entnehmbar ist.

Die Schwenkbarkeit der Schneide im Wesentlichen relativ zu dem Arbeitsgerät kann gemäß einer möglichen Ausgestaltung zufolge einer Schwenkverbindung mit dem Vorschubteil gegeben sein. Hierbei ist entsprechend über die Schwenkverbindung eine unmittelbare Anbindung der Schneide an dem Vorschubteil gegeben. Die Schwenkverbindung kann, wie auch bevorzugt, betrieblich nicht lösbar ausgebildet sein, alternativ jedoch ggf. unter Nutzung eines Werkzeuges, bspw. zum Zwecke eines Auswechselns der Schneide aufhebbar sein. Die Schwenkverbindung kann bspw. über ein Drehgelenk gegeben sein.

Alternativ oder auch kombinativ zu einer Schwenkverbindung mit dem Vorschubteil kann die Schneide auch mittels eines Halterungsteil relativ zu dem Vorschubteil verschwenkbar sein. Das Halterungsteil ist hierbei Teil des Arbeitsgerätes, insbesondere Teil des während des Vorschubs der Schneide feststehenden Teils des Arbeitskopfes, der auch die Aufnahmekontur aufweist. So kann dieses Halterungsteil des Arbeitskopfes zusammen mit der Schneide relativ zu einem feststehenden Abschnitt des Arbeitskopfes schwenkbar gestaltet sein. Dabei kann im Zuge der Verlagerung der Schneide in Schneidrichtung insbesondere mit Abschluss des vollständig durchgeführten Schneidvorganges die Schneide über das Vorschubteil quasi in oder an dem Halterungsteil abgelegt werden, wonach ggf. ein Abschwenken der Schneide zusammen mit dem Halterungsteil erfolgen kann. Mit diesem Aufschwenken erfolgt dann auch eine Öffnung der Aufnahmekontur.

Die Schneide kann zu diesem Zwecke allein in Schneidrichtung mit dem Vorschubteil zusammenwirken, bspw. über korrespondierende Anlageflächen.

Eine Rückverlagerung der Schneide bei entsprechender Rückverlagerung des Vorschubteiles kann gemäß einer möglichen Ausgestaltung nicht vorgesehen sein. In diesem Fall kann die Schneide ggf. in dem Halterungsteil bzw. an dem Halterungsteil verbleiben, weiter ggf. zur vollständigen Entfernung der Schneide und/oder zum Verschwenken der Schneide in eine die Aufnahmekontur freigebende Position.

In alternativer Ausgestaltung kann die Schneide mit dem Vorschubteil aber auch zur Ermöglichung einer Schiebeverlagerung der Schneide entgegen der Schneidrichtung verbunden sein. Hier kann bspw. eine lösbare Rastverbindung vorgesehen sein, die ein Lösen der Schneide von dem Vorschubteil bei Überschreiten einer vorgegebenen Auslösekraft ermöglicht. So kann bei üblichen Schneidvorgängen über die Rastverbindung eine Schleppmitnahme der Schneide entgegen der Schneidrichtung durchgeführt werden. Bei möglichen Schneidvorgängen, bei welchen die Schneide bspw. im Zuge einer Rückschleppbewegung entgegen der Schneidrichtung bspw. an dem durchtrennten Werkstück verkantet, wird zufolge des kontinuierlich sich zurückbewegenden Vorschubteils die Rastverbindung zu der Schneide gelöst, so dass das Vorschubteil allein zurückverlagert werden kann. Die Schneide selbst liegt hiernach zur vollständigen Entnahme und/oder zur Abschwenkung frei.

Die Rastverbindung kann hierzu einen Rastarm aufweisen. Dieser Rastarm kann an dem Vorschubteil vorgesehen sein, während an der Schneide eine mit dem Rastarm zusammenwirkende Rastaufnahme vorgesehen sein kann. Alternativ ist die Rastaufnahme vorschubteilseitig vorgesehen und der Rastarm schneidenseitig.

Der Rastarm kann in einer möglichen Ausbildung ohne Aufhebung der Rastverbindung eine Distanzierung des Vorschubteils zu der Schneide zulassen. Bei einer solchen Ausgestaltung ist der Rastarm und die mit diesem zusammenwirkende Rastaufnahme so ausgelegt, dass in Schneidrichtung bzw. entgegen der Schneidrichtung eine bevorzugt lineare Relativverlagerung zwischen Vorschubteil und Schneide ermöglicht ist. Mit Vollendung dieser Relativverlagerung kann eine Schleppmitnahme über die Rastverbindung erfolgen.

Die mögliche Rastverbindung kann, wie auch bevorzugt, auch in Verbindung mit einer Verschwenkbarkeit der Schneide relativ zu dem Vorschubteil zur Anwendung kommen, insbesondere bei einer Lösung, bei welcher die Schneide schwenkverbunden ist mit dem Halterungsteil des Arbeitskopfes.

Eine Beaufschlagung der Schneide durch das Vorschubteil kann zufolge Kraftübertragung über eine gesondert zu dem Rastarm ausgebildete Anschlagfläche erreicht werden. Eine solche Anschlagfläche kann sowohl vorschubteilseitig als auch schneidenseitig vorgesehen sein, wobei die Anschlagflächen von Schneide und Vorschubteil aneinander anliegend kraftübertragend wirken. Diese Anschlagflächen können gemäß einer bevorzugten Ausgestaltung allein in Schneidrichtung kraftübertragend wirken. In zur Schneidrichtung entgegen gerichteter Richtung kann eine Schleppmitnahme über die Rastverbindung gegeben sein.

Hierzu können gemäß einer weiteren Ausführungsform zwei Rastarme vorgesehen sein, wobei weiter auch sowohl vorschubteilseitig als auch schneidenseitig jeweils zwei Anschlagflächen vorgesehen sind. Jeder Anschlagfläche des Vorschubteils oder der Schneide kann ein Rastarm zugeordnet sein.

Bei einer möglichen Anordnung von zwei Rastarmen können diese bzgl. einer Öffnung der Aufnahmekontur quer zu der Schneidrichtung gegenüberliegend ausgebildet sein. Entsprechend können die Rastarme zugeordnet den die Aufnahmekontur beidseitig in Schneidrichtung betrachtet begrenzenden Anschlagflächen bspw. des Vorschubteiles zugeordnet sein.

Das Halterungsteil des Arbeitskopfes kann insbesondere bei einer lösbaren Rastverbindung zwischen Schneide und Vorschubteil so ausgebildet sein, dass dieses die Schneide in der Vorschubstellung, die ggf. einer Endstellung in Schneidrichtung betrachtet entspricht, taschenartig aufnimmt. Die Schneide kann entsprechend in Form eines Einschubteils in dem Halterungsteil aufgenommen sein und so ggf. zusammen mit dem Halterungsteil von dem ansonsten feststehenden Arbeitskopf insgesamt entfernt oder verschwenkt werden. Die diesbezügliche Einschubhalterung der Schneide in dem Halterungsteil kann bspw. in einer abgeschwenkten Stellung des Halterungsteils die Entnahme der Schneide ermöglichen, bspw. zum Zwecke eines Schneidenwechsels.

Zugeordnet einem bezogen auf eine Richtung quer zu der Schneidrichtung gegebenen Mittenbereich kann die Schneide Führungsmittel aufweisen, die mit Gegen-Führungsmitteln des Halterungsteils zusammenwirken. Diese Zusammenwirkung führt zu einer Mittenausrichtung der Schneide im Zuge dessen Verlagerung insbesondere in Schneidrichtung, was sich insbesondere als vorteilhaft erweist, wenn es zuvor im Zuge des Schneidens zu einer gewissen Auslenkung aus der Mittenausrichtung heraus kommt.

Auch kann die Schneide quer zu der Schneidrichtung und bezogen auf eine Breite der Schneide auch quer zu der Breitenrichtung der Schneide Einweisermittel aufweisen, die mit Gegen-Einweisermitteln des Halterungsteils zusammenwirken können. So kann eine insbesondere im Zuge des Schneidvorganges insbesondere in Dickenrichtung der Schneide versetzte oder herausgedrückte Schneide in geeigneter Weise zurück in die vorgegebene Ausrichtungsebene, die der Schneidebene entsprechen kann, gedrängt werden.

Das Halterungsteil bzw. der Arbeitskopf kann, wie weiter auch bevorzugt, eine an dem Querschnitt des zu schneidenden Werkstückes, bspw. Rohres, angepasste Aufnahmekontur aufweisen. Hierbei kann weiter die Aufnahmekontur querschnittsmäßig auch angepasst sein an einen für diesen Arbeitskopf, bzw. für die vorgesehene Schneide, größten Querschnitt eines zu schneidenden Werkstückes. Um hierbei auch Werkstücke kleineren Querschnitts, bspw. Rohre kleineren Durchmessers, mit diesem Arbeitskopf und dieser Aufnahmekontur ordnungsgemäß schneiden zu können, dies insbesondere unter Berücksichtigung einer gewünschten Mittenzentrierung und Abstützung des zu schneidenden Werkstückes, kann gemäß einer weiter bevorzugten Ausgestaltung an dem Halterungsteil oder an dem Arbeitskopf zugeordnet der Aufnahmekontur ein Einweiserteil befestigbar sein, zur Ausrichtung von Werkstücken kleinerer Durchmesser. Das Einweiserteil kann zu diesem Zwecke als gesondertes Teil vorliegen und dem Arbeitskopf bzw. dem Halterungsteil bei Bedarf zuordbar sein. Das Einweiserteil kann darüber hinaus bspw. zwei keilförmig zueinander verlaufende Einweiserarme aufweisen, über welche eine Mittenzentrierung des zu schneidenden Werkstückes, bspw. Rohres, erreicht werden kann.

Auch kann das Vorschubteil gabelförmig gestaltet sein, mit zwei außerhalb eines Schneidbereiches der Schneide auf die Schneide einwirkenden Gabelenden. Die Gabelöffnung kann angepasst sein an die Außenkontur des zu schneidenden Werkstücks, entsprechend bei einem Arbeitsgerät an den Kreisquerschnitt des Rohres. Die Schneide wird über die Gabelenden des Vorschubteils durch das Werkstück zum Schneiden desselben verlagert. Die Beaufschlagungsflächen im Bereich der Gabelenden und der Schneide können sich, wie bevorzugt, außerhalb des Schneidbereichs und somit in einer Überdeckungsstellung außerhalb des Werkstück-Grundrisses erstrecken, was die Entnahme der Schneide nach Durchführung des Schneidvorganges erleichtert. Die Schneide kann nach Durchführung des Schneidvorganges bezüglich des Werkstückes vollständig freiliegen.

Darüber hinaus kann sich die Gabelkontur auch gespiegelt in der Schneide wiederfinden, so dass in der Nutzungsstellung bei Anlage der Schneide an den Gabelenden sich mit Bezug auf eine Draufsicht auf die Schneide und das Vorschubteil eine Öffnung mit einer Öffnungskontur angepasst an die Werkstück-Querschnittskontur ergibt. Die Öffnung ergibt sich in einer möglichen Ausgestaltung jeweils hälftig zufolge der gabelförmigen Gestaltung des Vorschubteiles und der gabelförmigen Ausgestaltung der Schneide.

Auch kann die Aufnahmekontur an einem Halterungsteil ausgebildet sein, das, bezogen auf einen Querschnitt, in Nebeneinanderanordnung zu der Schneide ausgebildet ist. Die Schneide ist entsprechend bevorzugt ausgestaltet und angeordnet, zum Überfahren der Aufnahmekontur.

Das Halterungsteil kann, wie bevorzugt, eine der Schneide zugewandte Verfahrfläche ausbilden, auf welcher die Schneide seitlich aufliegend sich relativ zu dem Halterungsteil bewegt. Es ist diesbezüglich eine ebene Verfahrfläche gegeben. Auf dieser Verfahrfläche kann die Schneide nach vollständigem Durchführen des Schneidvorganges gegebenenfalls vollflächig anliegen.

Die Schneide kann relativ zu dem Halterungsteil soweit bewegbar sein, bis der oder die Freiräume vollständig geschlossen sind. Weiter bevorzugt ist eine Bewegung der Schneide im Zuge eines Schneidvorganges über diese Position, in welcher die Freiräume vollständig geschlossen sind, hinaus gegeben. Auch kann eine Verlagerung der Schneide allein, bspw. bei zweiteiliger Ausgestaltung von Schneide und Vorschubteil, über den Arbeitskopf hinaus ermöglicht sein, so bspw. zur Entnahme der Schneide, welche Entnahme im Wesentlichen in Schneidrichtung erfolgt oder zumindest in einer Richtung, die überlagert ist von der Schneidrichtung.

In einer möglichen Ausgestaltung kann die Schneide eine oder mehrere Schneidenspitzen aufweisen. So können auch zwei oder drei oder mehr Schneidenspitzen vorgesehen sein. Bei Ausgestaltung nur einer Schneidenspitze kann diese mit Bezug auf eine Draufsicht auf die Verfahrebene mittig vorgesehen sein, darüber hinaus gegebenenfalls unter pfeilartiger Ausgestaltung. Entsprechend trifft diese eine Schneidenspitze der Schneide im Zuge des Schneidvorganges und bei einem Schneiden eines rohrartigen Werkstückes bevorzugt mittig auf das Rohr, bezogen auf dessen Durchmesser.

Bei einer, wie vorbeschrieben, mittigen Ausbildung der Schneidenspitze kann dieser Bereich auch der Bereich sein, der zuerst das Werkstück, insbesondere bei rohrförmiger Ausgestaltung des Werkstückes, in Schneidrichtung vollständig durchsetzt. In dieser Stellung, welche der Stellung entspricht, bei welcher in einer Projektion eine erste Berührung des Schneidenbereiches mit der Aufnahmekontur erfolgt, ergeben sich in einer Draufsicht bevorzugt beidseitig der Schneidenspitze die vorbeschriebenen Freiräume zwischen der Schneidkante und der Aufnahmekontur.

Die eine oder mehreren Schneidenspitzen können, wie auch bevorzugt, symmetrisch zu einer durch den Mittelpunkt der Aufnahmekontur gehenden Verfahrlinie der Schneide ausgebildet sein. Die Verfahrlinie durchsetzt weiter bevorzugt auch das Werkstück mittig. Die Verfahrlinie kann gerade verlaufen, aber auch entlang eines Kreisbogens.

Auch kann die Schneide in einem Längsquerschnitt durch die Schneidenspitze einseitig von einer ebenen Unterfläche ausgehend einen keilförmigen Abschnitt aufweisen. Es ergibt sich ein von der Schneide und ausgehend von der Verfahrfläche des Halterungsteils zugewandten ebenen Unterfläche ausgehender Anschliff bzw. eine Fase. Hierdurch ist ein präziser Schnitt ermöglicht. Auch dieser keilförmige Abschnitt als Einweisermittel der Schneide dient zur Zusammenwirkung mit einem Gegen-Einweisermittel des Halterungsteils und/oder des Arbeitskopfes.

Zudem kann auf der Verfahrfläche des Halterungsteils in Breitenrichtung jenseits einer Randkante der Schneide ein- oder beidseitig ein Führungsteil angeordnet sein, zur U-förmigen Umfassung eines Randbereiches der Schneide. Die Schneide erfährt hierdurch eine Führung in Schneidrichtung entlang der Verfahrlinie der Schneide, bevorzugt zumindest bis in eine Schneidenposition, in welcher die Schneide vollständig über die Aufnahmekontur hinaus in Schneidrichtung verlagert ist.

Eine weiter günstige Handhabung wird erfindungsgemäβ dadurch erreicht, dass das Halterungsteil zusammen mit der Schneide bei Durchführung eines Schneidvorganges einen geschlossenen Arbeitsraum bildet.

Auch ergibt sich eine günstige Handhabung bei einer Ausgestaltung, bei welcher das Halterungsteil zur Aufnahme eines Werkstückes aufklappbar ist. So kann das Halterungsteil bspw. bei einem verbauten und zu durchtrennenden Rohr um dieses Rohr zufolge Schwenkverlagerung des Halterungsteiles gelegt werden, wonach sich ein geschlossener Arbeitsraum bildet. Die Halterungsteil-Verschlussstellung kann, wie bevorzugt, gesichert sein, bspw. rastgesichert.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ist, ist damit auch für dieses weitere Ausführungsbeispiel als jedenfalls mögliches vorhandenes Teil beschrieben. Auf der Zeichnung zeigt:
- Fig. 1: ein Arbeitsgerät in perspektivischer Darstellung, betreffend eine erste Ausführungsform;
- Fig. 2: das Arbeitsgerät in einer ersten Ansicht;
- Fig. 3: das Arbeitsgerät in einer weiteren Ansicht;
- Fig. 4: das Arbeitsgerät in einer Seitenansicht;
- Fig. 5: eine der Figur 3 entsprechende Darstellung, jedoch betreffen eine Stellung mit geöffnetem Arbeitsraum;
- Fig. 6: den Schnitt gemäß der Linie VI-VI in Figur 2;
- Fig. 7: den Schnitt gemäß der Linie VII-VII in Figur 3;
- Fig. 8: den Schnitt gemäß der Linie VIII-VIII in Figur 5;
- Fig. 9: den Schnitt gemäß der Linie IX-IX in Figur 2;
- Fig. 10: eine Folgedarstellung zu Figur 2 im Zuge eines Schneidvorganges;
- Fig. 11: die Herausvergrößerung des Bereiches XI in Figur 10;
- Fig. 12: eine Folgedarstellung zu Figur 10, nach Vollendung des Schneidvorganges;
- Fig. 13: den Schnitt gemäß der Linie XIII-XIII in Figur 6;
- Fig. 14: eine der Figur 1 entsprechende Darstellung, betreffend eine zweite Ausführungsform;
- Fig. 15: eine der Figur 2 entsprechende Darstellung, betreffend die Ausführungsform gemäß Figur 14;
- Fig. 16: eine der Figur 15 entsprechende Darstellung, betreffend die Entnahme der Schneide aus dem Arbeitskopf nach Durchführung eines Schneidvorganges;
- Fig. 16a: eine der Figur 16 entsprechende Darstellung, betreffend eine alternative Ausbildung;
- Fig. 17: in perspektivischer Darstellung die Anordnung des Arbeitsgeräts an einem Grundgerät;
- Fig. 18: eine der Figur 17 entsprechende Darstellung, betreffend die Anordnung an ein alternatives Grundgerät;
- Fig. 19: eine weitere alternative Anordnung gemäß Figur 17;
- Fig. 20: das Arbeitsgerät in einer Darstellung gemäß Figur 2, betreffend eine alternative Ausführungsform;
- Fig. 21: eine perspektivische Darstellung eines Arbeitsgeräts in einer weiteren Ausführungsform, die nicht Gegenstand der Erfindung ist;
- Fig. 22: eine der Figur 2 entsprechende Darstellung, betreffend die Ausführungsform gemäß Figur 21, die nicht Gegenstand der Erfindung ist;
- Fig. 23: den Schnitt gemäß der Linie XXIII-XXIII in Figur 22, die nicht Gegenstand der Erfindung ist;
- Fig. 24: eine Folgedarstellung zu Figur 22 im Zuge eines Schneidvorganges, die nicht Gegenstand der Erfindung ist;
- Fig. 25: eine weitere Folgedarstellung im Zuge eines Schneidvorganges, die nicht Gegenstand der Erfindung ist;
- Fig. 26: die Herausvergrößerung des Bereichs XXVI in Figur 25, die nicht Gegenstand der Erfindung ist;
- Fig. 27: eine Folgedarstellung zu Figur 25, nach Vollendung des Schneidvorganges, die nicht Gegenstand der Erfindung ist;
- Fig. 28: das Arbeitsgerät in einer Darstellung gemäß Figur 22, betreffend eine weitere Ausführungsform, die nicht Gegenstand der Erfindung ist;
- Fig. 29: das Arbeitsgerät in perspektivischer Darstellung, betreffend eine weitere Ausführungsform;
- Fig. 30: das Arbeitsgerät der Ausführungsform gemäß Fig. 29 in einer ersten Ansicht;
- Fig. 31: das Arbeitsgerät in einer weiteren Ansicht;
- Fig. 32: das Arbeitsgerät in einer Seitenansicht;
- Fig. 33: den Schnitt gemäß der Linie XXXIII - XXXIII in Fig. 30;
- Fig. 34: den Arbeitskopf des Arbeitsgerätes in einer Ansicht gemäß Fig. 30, betreffend eine abgeschwenkte Stellung eines Halterungsteils mit darin aufgenommener Schneide;
- Fig. 35: das Arbeitsgerät in einer Situation gemäß Fig. 34 in perspektivischer Darstellung;
- Fig. 36: den Schnitt gemäß der Linie XXXVI - XXXVI in Fig. 33, betreffend eine Schneidenendstellung;
- Fig. 37: eine der Fig. 36 entsprechende Schnittdarstellung, betreffend eine Schneiden-Mitschleppstellung über ein entgegen der Schneidrichtung zurückfahrendes Vorschubteil;
- Fig. 38: den vergrößert dargestellten Schnitt XXXVIII -XXXVIII in Fig. 30;
- Fig. 39: den Halterungskopf des Arbeitsgerätes gemäß der Ausführungsform in Fig. 29 in perspektivischer Explosionsdarstellung;
- Fig. 40: eine der Fig. 39 entsprechende Darstellung, betreffend eine weitere Ausführungsform;
- Fig. 41: eine Ansichtsdarstellung entsprechend Fig. 30, betreffend die Ausführungsform gemäß Fig. 40;
- Fig. 42: eine der Fig. 31 im Wesentlichen entsprechende Ansichtsdarstellung, betreffend die Ausführungsform gemäß Fig. 40;
- Fig. 43: eine vergrößerte Schnittdarstellung gemäß der Linie XLIII -XLIII in Fig. 41;
- Fig. 44: den vergrößert dargestellten Schnitt gemäß der Linie XLIV - XLIV in Fig. 41.

### Beschreibung der Ausführungsformen

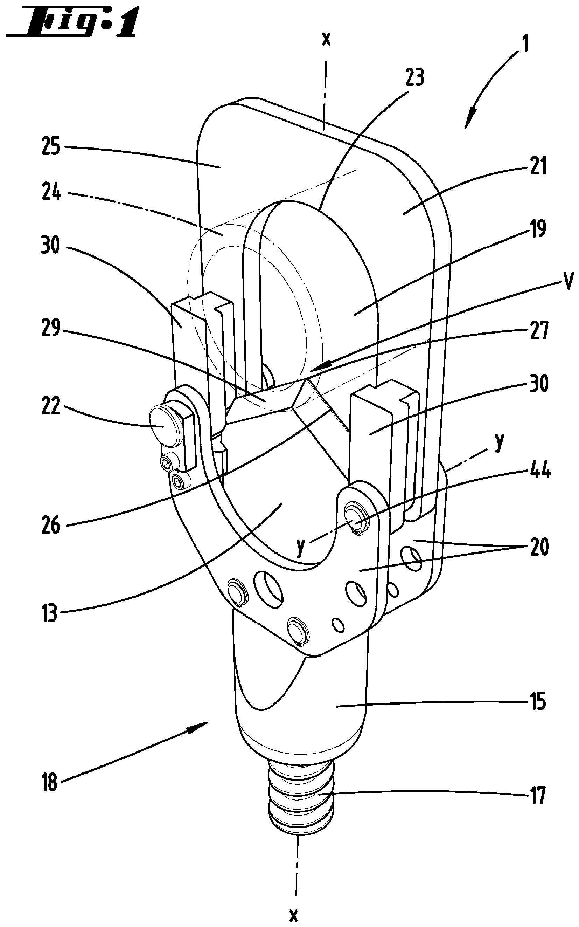

Dargestellt und beschrieben ist, zunächst mit Bezug zu Figur 1, eine erste Ausführungsform eines Arbeitsgeräts 1, insbesondere eines hydraulischen Arbeitsgeräts, in Form eines auswechselbaren und einem Grundgerät 2 zuordbaren Gerätekopfs.

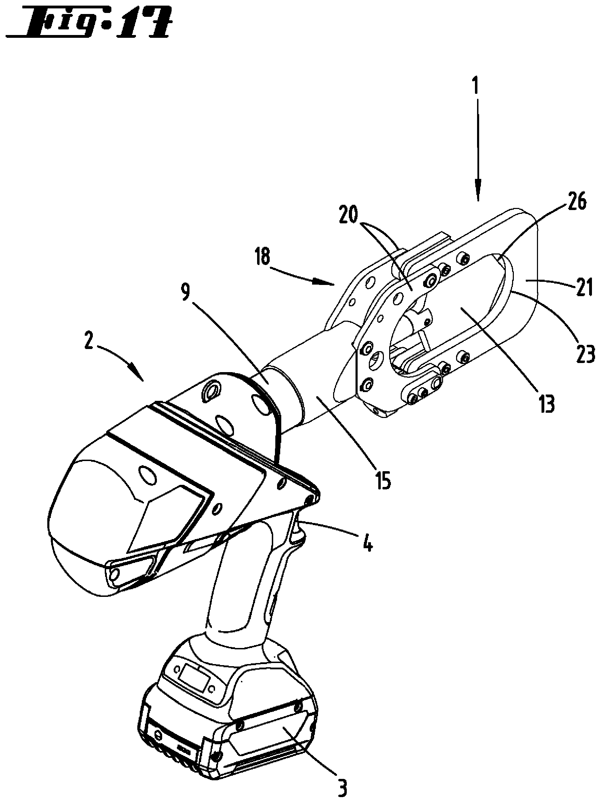

Das Grundgerät 2 kann gemäß der Darstellung in Figur 17 pistolenartig gestaltet sein, mit einem Griffbereich 3, in welchem ein Akkumulator 4 zum elektrischen Betrieb einer Hydraulikpumpe in dem Gerät angeordnet ist. Über einen elektrischen Taster 4 ist das Grundgerät 2 in Betrieb setzbar. Ein solches Gerät ist bspw. aus der WO 2008/138987 A2 (US 8,056,473 B2) bekannt.

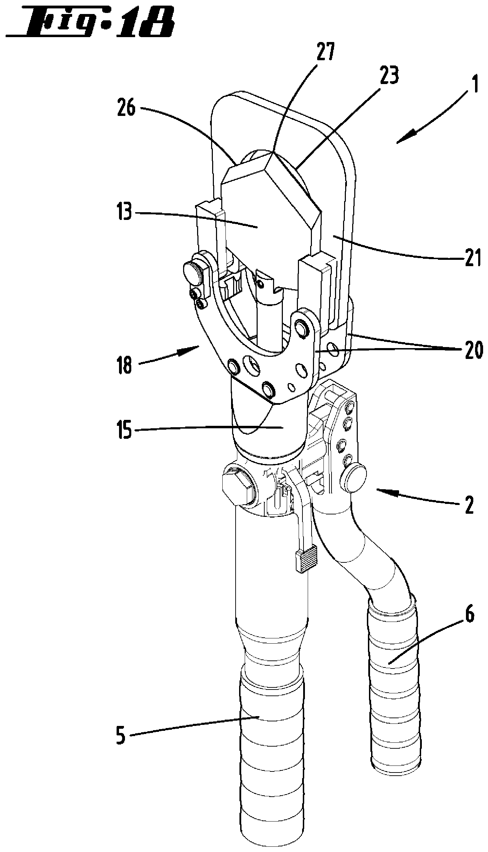

Auch kann das Grundgerät 2 zur Aufnahme des Arbeitsgerätes 1 als Handarbeitsgerät gemäß der Darstellung in Figur 18 ausgebildet sein. Das Handarbeitsgerät ist durch Verschwenken der Handgriffe 5 und 6 zu betätigen, wobei über eine nicht dargestellte Pumpanordnung ein Hydraulikdruck erzeugt wird.

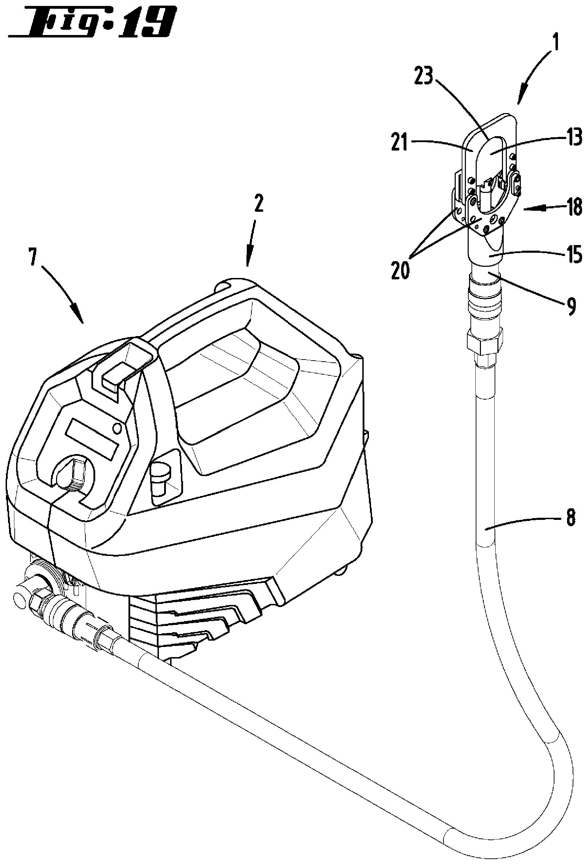

Auch kann das Grundgerät 2 gemäß der Darstellung in Figur 19 ausgebildet sein, aufweisend ein Antriebsaggregat 7, mit welchem Hydraulikdruck erzeugbar ist und Hydraulikmittel durch einen angeschlossenen Hydraulikschlauch 8 zu dem anderen Ende des Hydraulikschlauches und dem hier angeschlossenen Arbeitsgerät 1 geleitet wird.

In dem Grundgerät 2 wird bei entsprechender Betätigung Öl aus einem Vorratsraum in einen Zylinder 9 gepumpt, wodurch ein Kolben 10 in Richtung seiner Arbeits-Endstellung bewegt wird.

An dem Zylinder 9, der den mit einer Radialdichtung 11 versehenen Kolben 10 umfasst, ist das Arbeitsgerät 1 angeordnet.

Der im Wesentlichen topfförmig ausgebildete Hydraulikzylinder 9 ist dem Arbeitsgerät 1 zugewandt offen ausgebildet und dient zum einen innenwandig der Führung des Kolbens 10 und zum anderen außenseitig zur Verbindung des Arbeitsgerätes 1.

Der Zylinder 9 umfasst einen Kolbenschaft 12, der arbeitsgeräteseitig Träger einer Schneide 13 bzw. bei, wie untenstehend noch näher ausgeführt, zweiteiliger Ausgestaltung Träger eines Vorschubteiles 14 für die Schneide 13 ist. Das Arbeitsgerät ist mittels eines Zylinderabschnitts 15 mit dem Grundgerät 2 verbunden. Der Zylinderabschnitt 15 formt nach radial innen eine Anschlagwandung 16 aus, die von dem Kolbenschaft 12 durchsetzt ist. Die Anschlagwandung 16 dient zur Abstützung des einen Endes einer den Kolbenschaft 12 umfassenden Zylinder-Druckfeder 17, deren anderes Ende auf den Kolben 10 einwirkt.

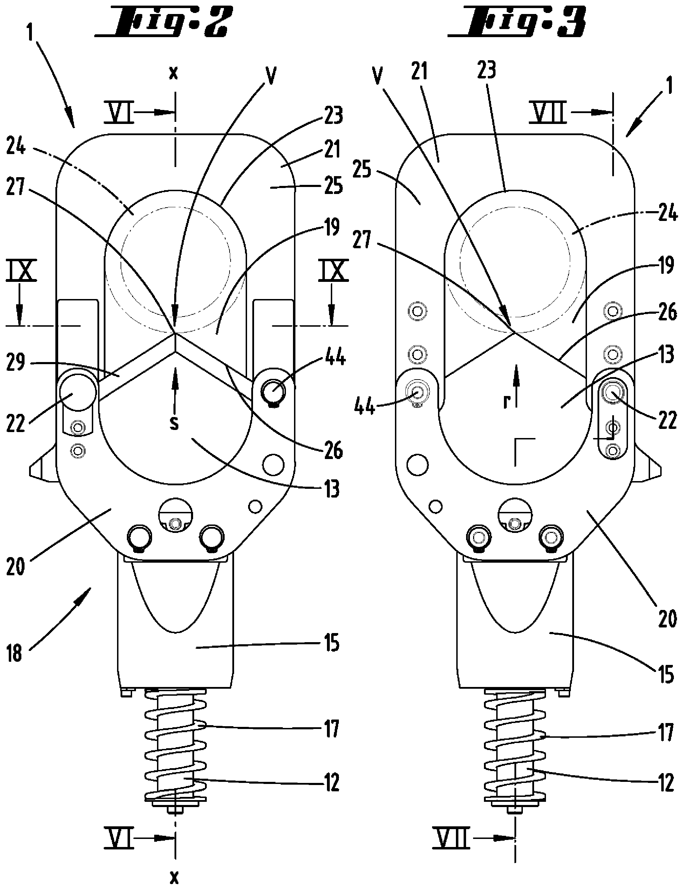

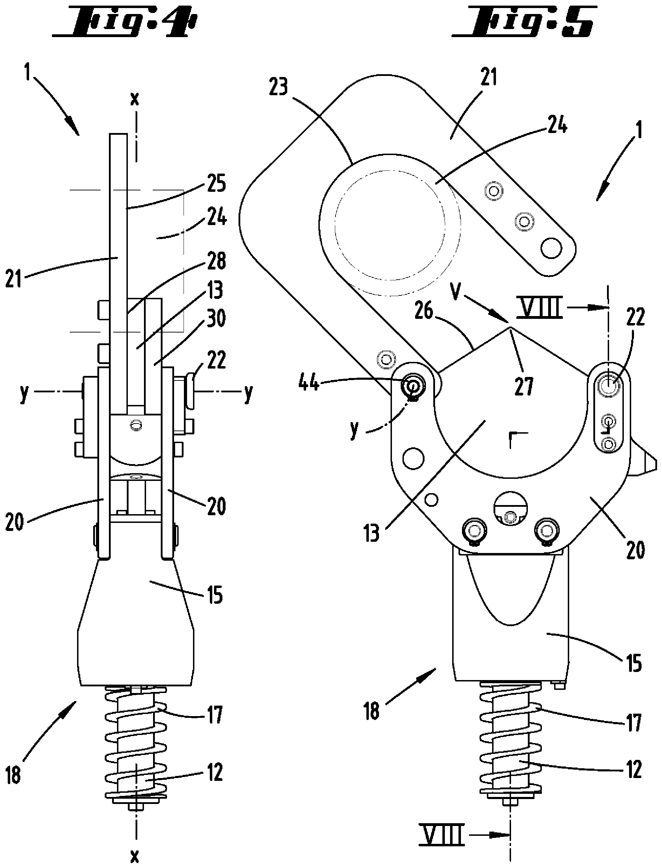

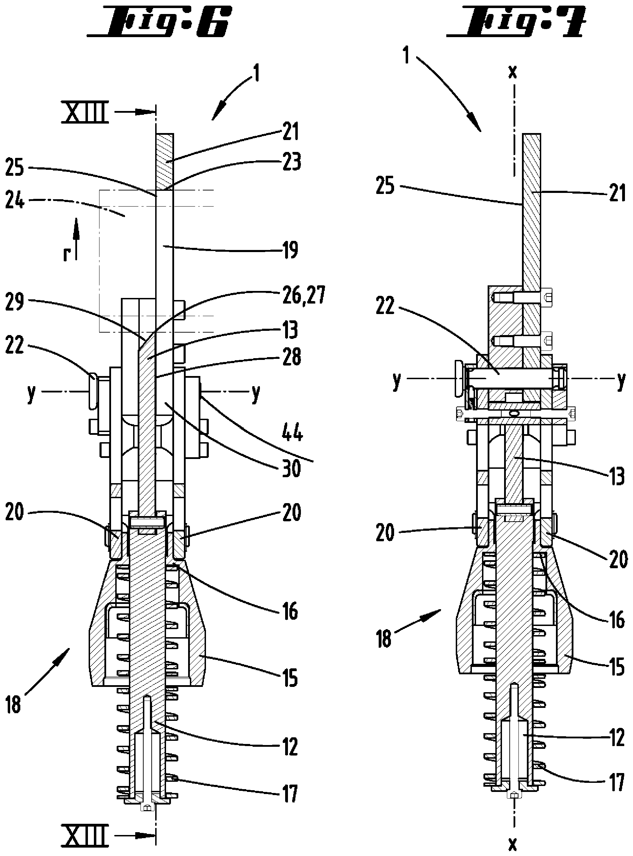

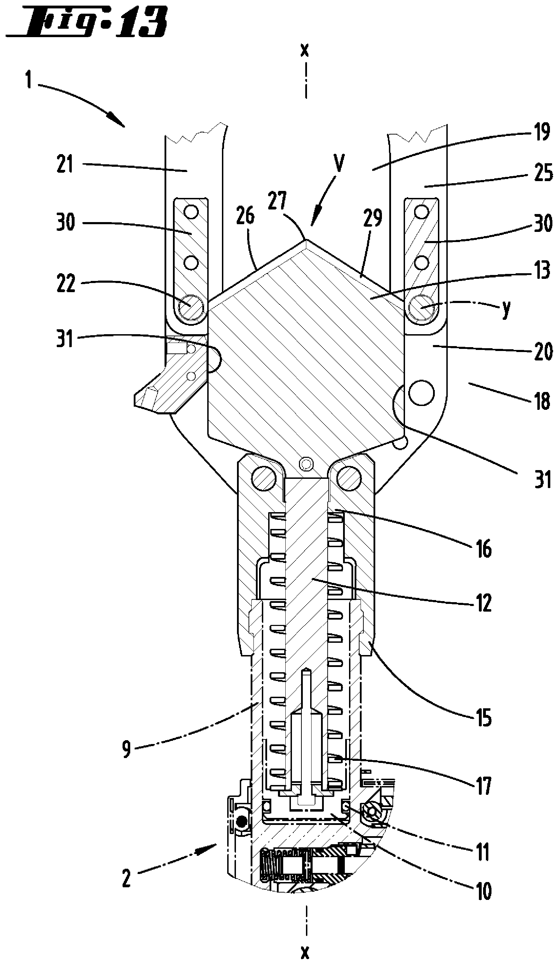

An dem Zylinderabschnitt 15 des Arbeitsgerätes 1 ist in den in den Figuren 1 bis 20 dargestellten Ausführungsformen ein Arbeitskopf 18 befestigt. Dieser formt mit Bezug auf einen Grundriss gemäß Figur 2 einen im Wesentlichen bezüglich der Außenkontur rechteckförmigen Halterungsrahmen, zur Ausformung eines zumindest im Zuge des Schneidvorganges geschlossenen Arbeitsraumes 19.

Im Wesentlichen besteht der Arbeitskopf 18 hierbei zunächst aus zwei unmittelbar an dem Zylinderabschnitt 15 festgelegten Halterungsgrundteilen 20, die, jeweils bevorzugt plattenförmig gestaltet, beidseitig einer die Mittellängsachse x in Verfahrrichtung r der Schneide 13 verlängernde Arbeitsgeräte-Mittellinie und gleichmäßig zu dieser Mittellinie beabstandet angeordnet sind. Die Breitseitenflächen der Halterungsgrundteile 20 weisen aufeinander zu. Der quer zur Achsrichtung betrachtete lichte Abstand zwischen den Halterungsgrundteilen 20 ist bevorzugt größer gewählt als die in selber Richtung betrachtete Dicke der Schneide 13 und/oder des Vorschubteils 14.

Weiter sind die Halterungsgrundteile 20 mit Bezug auf den Grundriss im Wesentlichen gabelförmig gestaltet, mit einer in Verfahrrichtung r weisenden Gabelöffnung. Die Gabelöffnung begrenzt den vorbeschriebenen Arbeitsraum 19 entgegen der Verfahrrichtung r.

Teil des Arbeitskopfes 18 kann weiter ein im Grundriss im Wesentlichen U-förmig bzw. gabelförmig gestaltetes Halterungsteil 21 sein. Auch dieses ist bevorzugt plattenförmig gestaltet. Das Halterungsteil 21 kann bei Ausgestaltung des Arbeitskopfes 18 als im Wesentlichen rechteckförmiger Halterungsrahmen im Bereich eines Gabelendes schwenkbar an den Halterungsgrundteilen 20 befestigt sein. Die diesbezügliche Schwenkachse y verläuft senkrecht zur Mittellängsachse x.

Das Halterungsteil 21 ist dabei bevorzugt in einer Arbeitskopf-Schließstellung mit seinem anderen Gabelende über einen verlagerbaren Bolzen 22 rastsicherbar.

Das Halterungsteil 21 weist zur Begrenzung des Arbeitsraumes 19 in Verfahrrichtung r eine Aufnahmekontur 23 auf. Diese ist bevorzugt angepasst an die Außenkontur eines zu schneidenden Werkstücks 24, so gemäß den Darstellung angepasst an die Außenkontur eines zu schneidenden Rohres entsprechend halbkreisförmig.

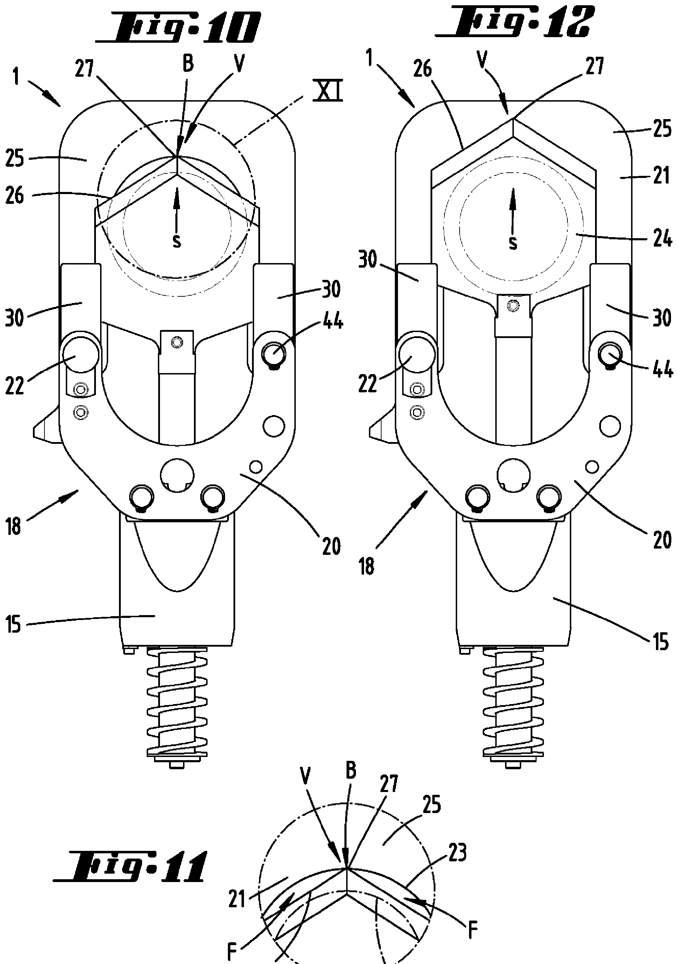

Die Schneide 13 ist plattenförmig gestaltet, wie auch bevorzugt das gegebenenfalls vorgesehene Vorschubteil 14, wobei weiter insbesondere die Schneide 13 mit einer Breitseitenfläche auf einer zugewandten Verfahrfläche 25 des Halterungsteils 21 seitlich aufliegt. Die dem Halterungsteil 21 abgewandte Breitseitenfläche der Schneide 13 ist insbesondere in einer vorverlagerten Schneidstellung nicht durch einen weiteren Bereich insbesondere des Arbeitskopfes 18 übergriffen, kann entsprechend insbesondere in einer vorverlagerten Stellung gemäß der Darstellung in Figur 12 im Wesentlichen freiliegen.

Die Schneide 13 weist mit Bezug auf einen Grundriss gemäß Figur 2 eine pfeilartig verlaufende Schneidkante 26 auf, mit einem Vorsprungbereich V in Form einer Schneidenspitze 27, die in einer senkrechten Projektion der Schneide 13 auf die zugewandte Verfahrfläche 25 des Halterungsteiles 21 auf der Mittellängsachse x liegt und sich somit im Zuge des Schneidvorganges entlang einer, den Arbeitsraum 19 in Verfahrrichtung r teilenden Verfahrlinie verläuft.

In einem Längsquerschnitt durch die Schneide 13 und insbesondere im gegebenen Fall durch die Schneidenspitze 27 weist die Schneide 13 eine bspw. ebene Unterfläche 28 auf, über welche diese auf der Verfahrfläche 25 des Halterungsteiles 21 abgeleitet. Ausgehend von dieser Unterfläche 28 geht ein keilförmiger Abschnitt 29 aus. Dieser erstreckt sich unter Einschluss eines spitzen Winkels von etwa 30° bis 45° zu der Unterfläche 28 entgegen der Verfahrrichtung r. Die Unterfläche 28 kann anstatt einer bevorzugt ebenflächig durchgehenden Gestaltung auch einen oder mehrere Absätze aufweisen, mit welchen die Schneide 13 auf der Verfahrfläche 25 gleitet.

Der keilförmige Abschnitt 29 ergibt sich über die gesamte Schneidkante 26, entsprechend beidseitig der Schneidenspitze 27.

Insbesondere die Schneide 13 erfährt eine Führung in Verfahrrichtung r zufolge Anordnung zweier, an dem Halterungsteil 21 auf der Verfahrfläche 25 befestigter Führungsteile 30. Jeweils einem Gabelabschnitt des Halterungsteils 21 ist ein solches Führungsteil 30 zugeordnet, zur jeweiligen Zusammenwirkung mit einer in Verfahrrichtung r verlaufenden Randkante 31 der Schneide 13.

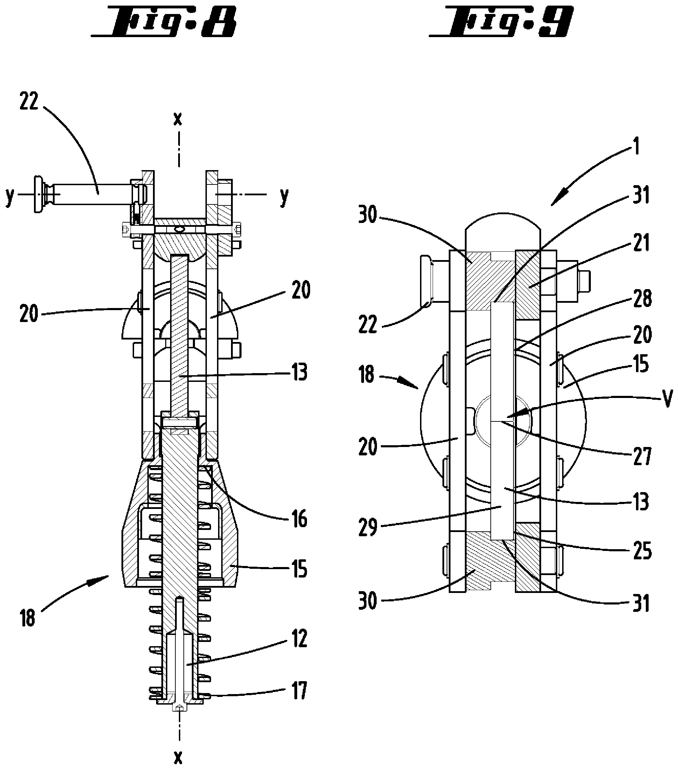

Durch die Anordnung und Ausgestaltung der Führungsteile 30 ergibt sich in einem Querschnitt gemäß der Darstellung in Figur 9 eine insgesamt U-förmige Umfassung der jeweils zugewandten Randkante 31 der Schneide 13.

Zur Durchführung eines Schneidvorganges kann durch ein Abschwenken oder auch vollkommenes Entfernen des Halterungsteils 21 der Arbeitskopf 18 mit dessen Arbeitsraum 19 geöffnet werden. Unter Einfangen des zu schneidenden Werkstücks 24 in dem Arbeitsraum 19 wird hiernach der Arbeitskopf 18 unter entsprechendem Rückschwenken des Halterungsteils 21 geschlossen.

Das Werkstück 24 liegt abstützend an der Aufnahmekontur 23 des Halterungsteils 21 an.

Zufolge hydraulischer Beaufschlagung wird über den Kolbenschaft 12 die Schneide 13 in Verfahrrichtung r und somit in Richtung auf das Werkstück 24 verlagert, wobei die Schneidenspitze 27 bei einer im Querschnitt bevorzugt kreiszylindrischen Ausgestaltung des Werkstückes 24 zuerst auf die Mantelfläche des Werkstückes 24 trifft (vgl. Figur 3). Es ergibt sich eine Schneidrichtung s in Übereinstimmung mit der Verfahrrichtung r.

Im Zuge der weiteren Verlagerung der Schneide 13 in Verfahrrichtung r erfolgt eine bevorzugt gleichmäßige Durchtrennung des Werkstückes 24 ausgehend - mit Bezug auf eine Grundrissdarstellung gemäß Figur 10 - von der auch durch die Mittellängsachse x repräsentierten Verfahrlinie beidseitig gleichmäßig nach außen.

In einer Stellung gemäß Figur 10, in welcher die Schneidenspitze 27 in einer senkrechten Projektion der Schneide 13 auf das Halterungsteil 21 die Aufnahmekontur 23 des Halterungsteils 21 berührt, ergeben sich quer zur Verfahrrichtung r beidseitig der Schneidenspitze 27 Freiräume F zwischen der Schneidkante 26 und der Aufnahmekontur 23. Entsprechend ergeben sich mit Durchstoßen der Schneidenspitze 27 durch das Werkstück 24 beidseitig der Schneidenspitze 27 noch Bereiche, die unter weiterer Abstützung des Werkstücks 24 an der Aufnahmekontur 23 noch nicht durchtrennt sind. Dies erfolgt erst mit weiterer Verlagerung der Schneide 13 in Verfahrrichtung r und somit vollständiger Verlagerung der Schneidkante 26 über die Aufnahmekontur 23 hinaus (vgl. Figur 12).

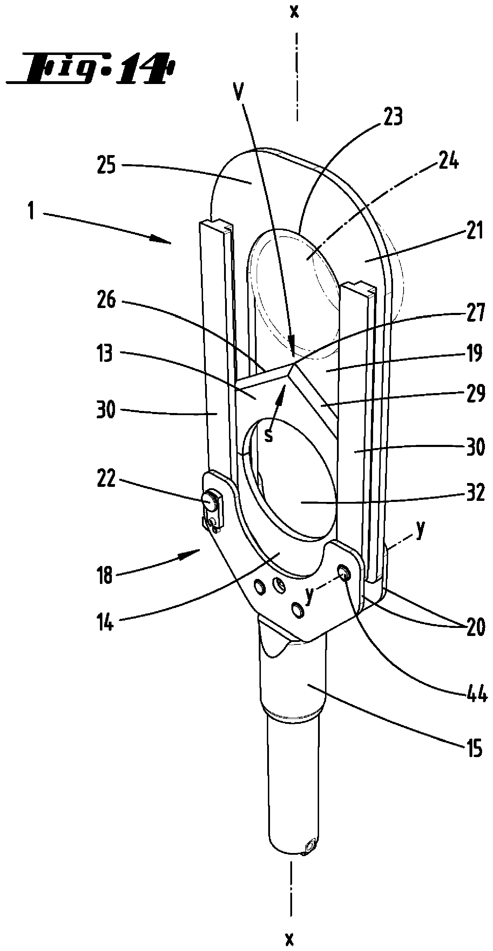

Auch kann die Schneide 13 nur mittelbar über ein Vorschubteil 14 in Verfahrrichtung r bewegbar sein (vgl. Figuren 14 bis 16). Das Vorschubteil 14 ist mit dem Kolbenschaft 12 unmittelbar verbunden und ist in Verfahrrichtung r betrachtet gabelförmig gestaltet. An den Stirnflächen 38 der Gabelenden 41 stützt sich die Schneide 13 ab, welche zugewandt dem Vorschubteil 14 ebenfalls gabelförmig mit korrespondierenden Stirnflächen 39 ausgebildet ist. Die Stirnflächen 38 und 39 von Vorschubteil 14 und Schneide 13 bilden Anschlagflächen aus.

In der Anlagestellung ergibt sich zufolge der beiden gabelförmigen Ausgestaltungen eine Öffnung 32, die kontur- und größenmäßig angepasst sein kann an die Aufnahmekontur 23 des Halterungsteils 21, darüber hinaus angepasst an das zu schneidende Werkstück 24. Entsprechend ergibt sich zum Schneiden eines rohrförmigen Werkstücks eine Öffnung 32 mit kreisscheibenförmiger Öffnungsfläche.

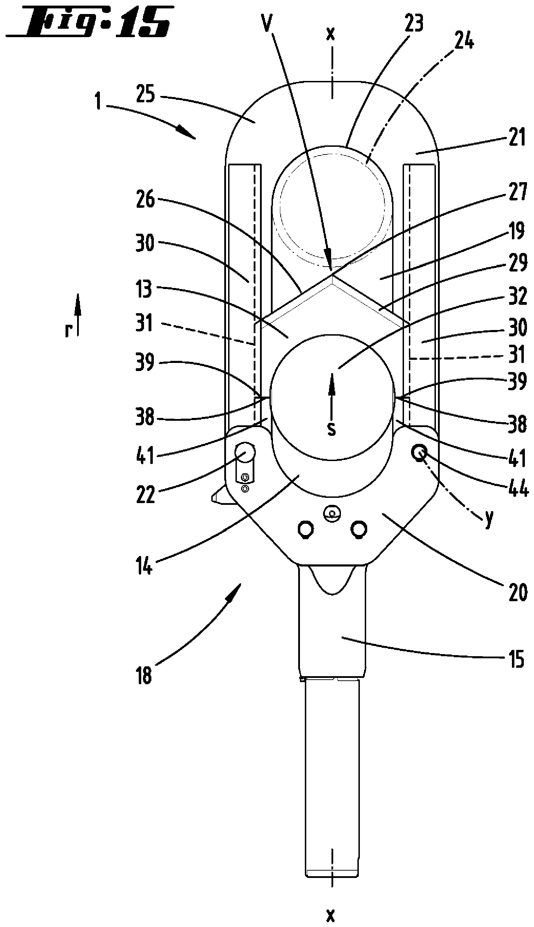

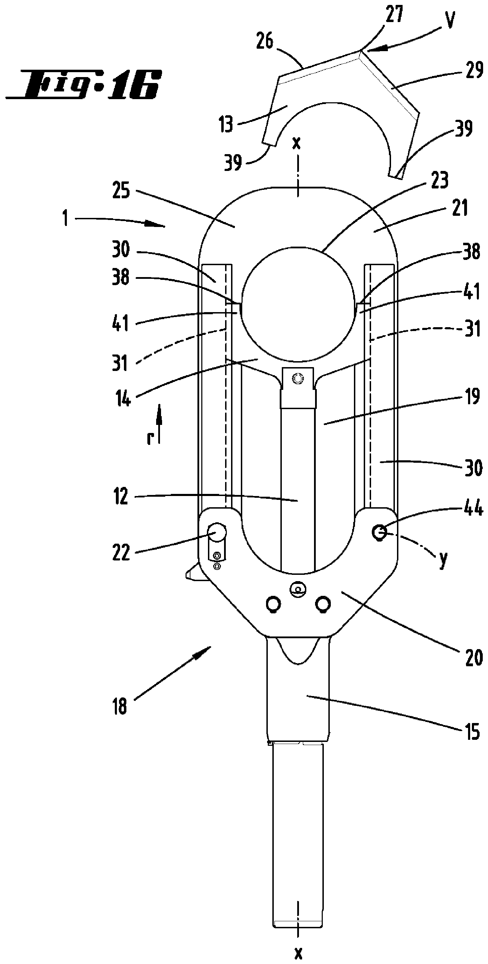

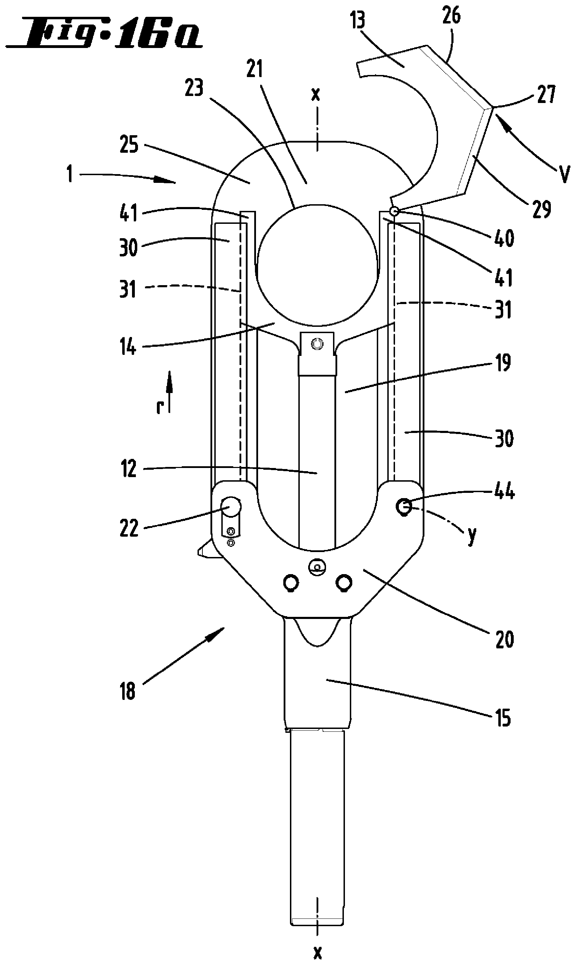

Zufolge dieser Ausgestaltung kann die Schneide 13 nach vollständig durchgeführtem Schneidvorgang aus dem Arbeitskopf 18 entnommen werden, da diese, gegebenenfalls noch zwischen Halterungsteil 21 und Führungsteilen 30 geführt, jenseits des Werkstückes 24 freiliegt (vgl. Figuren 15 und 16).

Nach Rückverfahren des Vorschubteils 14 kann die Schneide 13 für einen nächsten Schneidvorgang wieder eingesetzt werden.

Die Schneide 13 ist darüber hinaus unverlierbar über ein flexibles Band oder eine Kette an dem Vorschubteil 14 angebunden, wobei die Länge des Bandes oder der Kette die vorbeschriebene Entnahme der Schneide 13 ermöglicht. In dieser Hinsicht kann die Schneide 13 ergänzend oder alternativ mit dem Vorschubteil 14 über ein Gelenk 40 verbunden sein (vgl. Figur 16a), über welches die Schneide 13 nach vollständigem Durchfahren des Werkstückes 24 in eine abgeschwenkte Stellung verbracht werden kann. Die Verschwenkung kann bspw. allein oder unterstützt durch Schwerkraft erreicht werden.

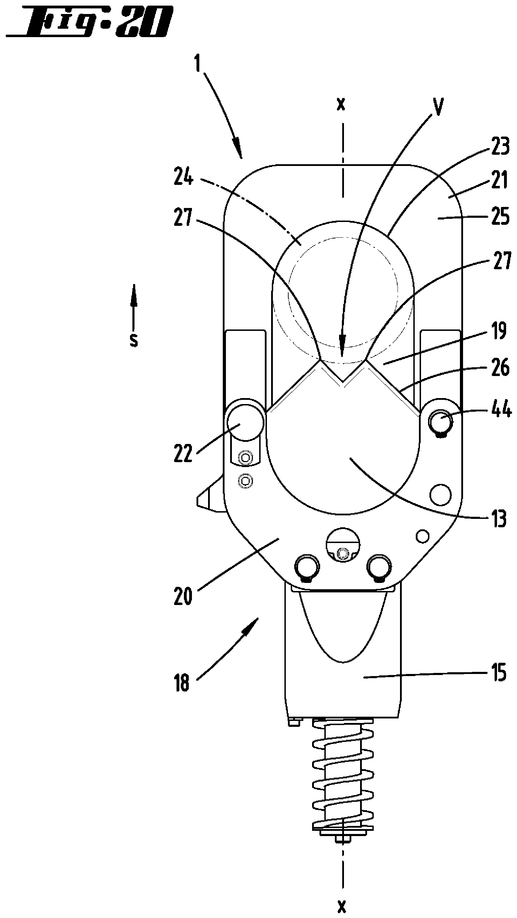

Wie aus der Darstellung in Figur 20 ersichtlich kann die Schneide 13 auch mit zwei Vorsprungbereichen V bzw. zwei Schneidenspitzen 27 versehen sein, die jeweils frei über die konvexe Kontur hinausragen. Die Schneidenspitzen sind bevorzugt symmetrisch zu der Mittellängsachse x, die bei einer solchen Schiebebackenausbildung zugleich auch der Verfahrlinie entspricht, angeordnet.

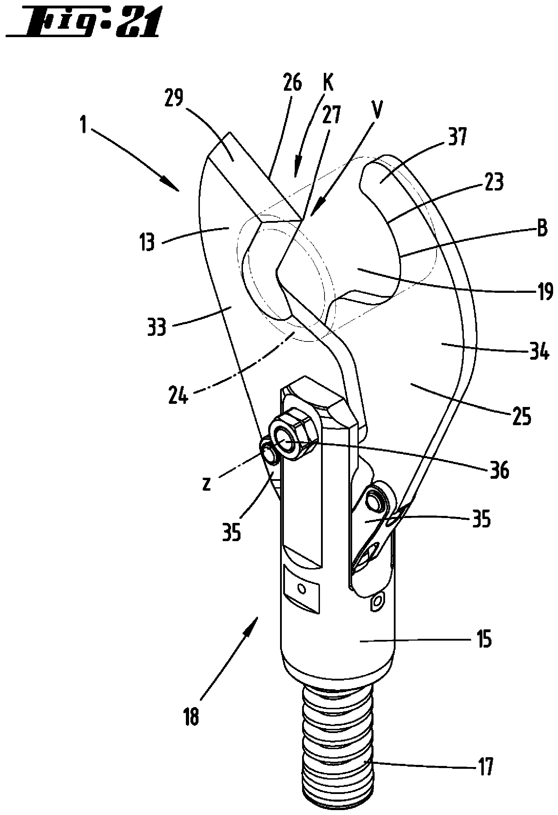

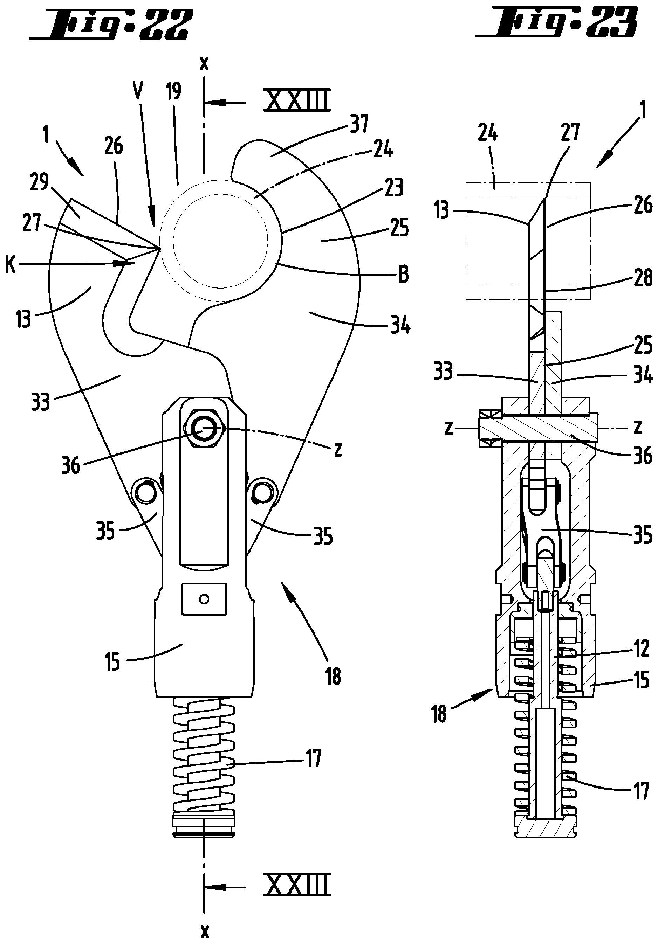

Während in den in den Figuren 1 bis 20 dargestellten Ausführungsformen der Arbeitskopf 18 schiebebackenartig ausgebildet ist, zeigen die Darstellungen der Figuren 21 bis 28 Ausbildungen des Arbeitskopfes mit Schwenkbacken.

Die erste Schwenkbacke 33 und die zweite Schwenkbacke 34 sind um eine gemeinsame Schwenkachse z schwenkbar, welche Schwenkachse z quer gerichtet zur Mittellängsachse x ausgerichtet ist und diese schneidet.

Die schwenkbeweglichen Schwenkbacken 33 und 34 sind jeweils über einen exzentrisch an den Schwenkbacken 33 bzw. 34 angelenkte Steuerlenker 35 an den Kolbenschaft 12 des Grundgerätes 2 angebunden, dies bei bevorzugter im Wesentlichen symmetrischer Anordnung der Schwenkbacken 33 und 34 relativ zu der Mittellängsachse x.

Die geometrische Schwenkachsen der gelenkigen Anbindung jedes Steuerlenkers 35 an der Schwenkbacke 33, 34, wie auch an dem Kolbenschaft 12, erstreckt sich parallel ausgerichtet zu der Schwenkachse z der beiden Schwenkbacken 33 und 34.

Die Schwenkachse z der Schwenkbacken 33 und 34 bildet ein Schwenkbolzen 36, der in dem Zylinderabschnitt 15 des Grundgerätes 2 gelagert ist.

Die zweite Schwenkbacke 34 weist die Aufnahmekontur 23 auf, die auch in dieser Ausbildungsform als konkave Vertiefung, insbesondere annähernd halbkreisförmige Ausnehmung gebildet ist. Die Kontur öffnet sich in der Offenstellung des Arbeitskopfes 18 gemäß der Darstellung in Figur 21 zu der Mittellängsachse x gerichtet.

Ausgehend von der Schwenkanbindung der Schwenkbacke 34 an dem Schwenkbolzen 36 ist die Aufnahmekontur 23 in ihrer Erstreckung beidseitig begrenzt durch ein achsnahes Ende der Schwenkbacke 34 und ein achsfernes, bezogen auf die Schwenkachse z radial äußeres Ende 37 der Schwenkbacke 34.

Die gegenüberliegende erste Schwenkbacke 33 ist zugewandt der Aufnahmekontur 23 mit einer konvexen Kontur K versehen, die in den dargestellten Ausführungsformen weiter als Schneide 13, mit einem, eine Schneidenspitze 27 formenden Vorsprungbereich V geformt ist. Die Schneidenspitze 27 bewegt sich im Zuge einer über das Grundgerät 2 bewirkten Schwenkverlagerung der Schwenkbacke 33 entlang einer Verfahrlinie, die im Wesentlichen einem Kreisbogen a entspricht, mit einem Mittelpunkt in der Schwenkachse z.

Im Zuge der Vorverlagerung des geräteseitigen Kolbens 10 werden beide Schwenkbacken 33 und 34 zugleich und gleichmäßig über denselben Kreisbogen a aufeinander zu schwenkverlagert.

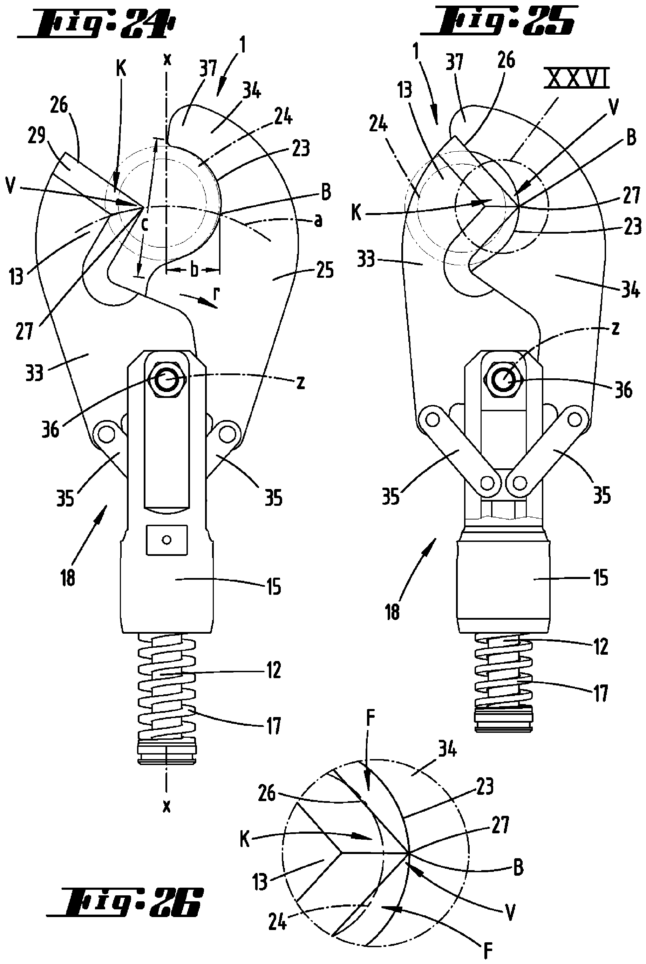

Die zweite Schwenkbacke 34 erreicht hierbei eine Zwischenstellung gemäß der Darstellung in Figur 24, in der dessen freies Ende 37 in Berührung tritt zu der Mittellängsachse x. Gegenüber dieser Mittellängsachse x bzw. einer das freie Ende 37 mit dem achsnahen Ende und die Aufnahmekontur 23 überspannenden Linie ist der Bereich B, der im Zuge der weiteren Schneidbewegung von dem Vorsprungbereich V zuerst berührt wird, um ein Zurückversetzungsmaß b zurückversetzt, das in dem dargestellten Ausführungsbeispiel etwa dem halben freien Öffnungsmaß c der konkaven Aufnahmekontur 23 zwischen dem freien Ende 37 und dem achsnahen Ende entspricht.

In der Berührungsstellung von Vorsprungbereich V bzw. Schneidenspitze 27 und Berührungsbereich B der Aufnahmekontur 23 gemäß der Darstellung in den Figuren 25 und 26 ergeben sich beidseitig senkrecht zu der Verfahrrichtung r Freiräume F zwischen der Schneidkante 26 und der Aufnahmekontur 23. Diese Freiräume F sind nach weiterer Verlagerung der Schneide 13 zum Durchtrennen des Werkstücks 24 vollständig durch die erste Schwenkbacke 33 verschließbar.

Die zweite Schenkbacke 34 weist eine Breitseite auf, die der ersten Schwenkbacke 33 als Verfahrfläche 25 dient.

Die Rückverlagerung der Schwenkbacken 33 und 34 in die offene Grundstellung erfolgt, wie auch bei der Schiebebackenlösung, durch Rückverlagerung des antreibenden Kolbens 10 unter Mitschleppen der Schwenkbacken 33 und 34 über die Steuerlenker 35.

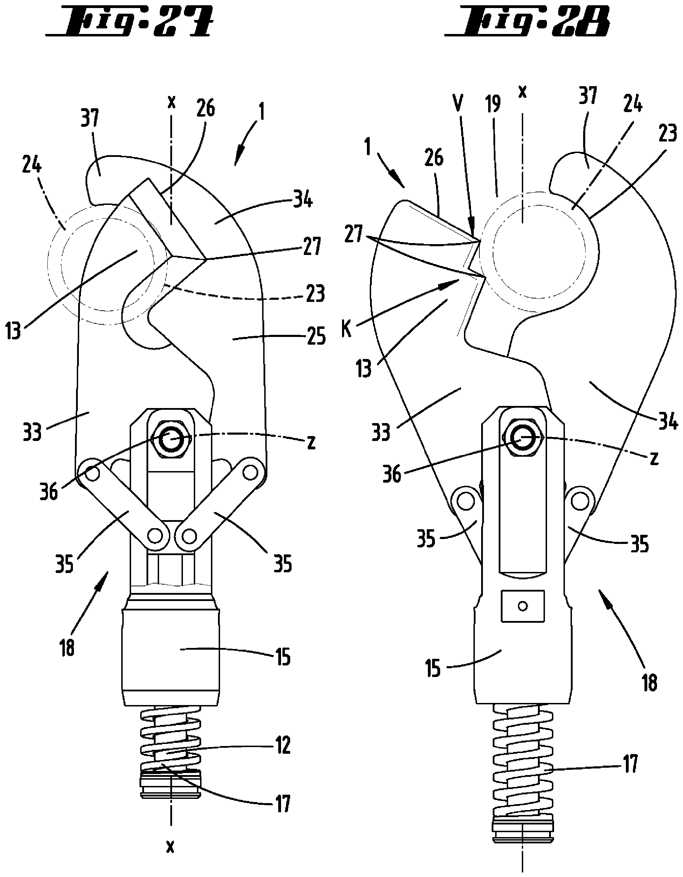

Gemäß der schematischen Darstellung in Figur 28 kann auch bei einer Ausgestaltung mit Schwenkbacken 33 und 34 der Vorsprungbereich V auch durch eine Mehrzahl an Schneidenspitzen 27 gebildet sein. Dargestellt ist eine Lösung mit zwei Schneidenspitzen 27, die symmetrisch zu der Verfahrlinie angeordnet sein können. Beide Schneidenspitzen 27 können gemäß einer möglichen Ausbildung im Zuge der Verschwenkung zugleich auf die Mantelaußenfläche des zu schneidenden Werkstücks 24 treffen, entsprechend bei weiterer Verlagerung zugleich in das Material der Werkstückwandung einschneiden.

Auch kann eine der Schwenkbacken als Festbacke ausgebildet sein, bspw. mit einer Aufnahmekontur, während die andere Backe als Schwenkbacke ausgebildet ist, bevorzugt aufweisend eine konvexe Kontur in Form einer Schneide mit einem Vorsprungbereich, bspw. in Form einer Schneidenspitze.

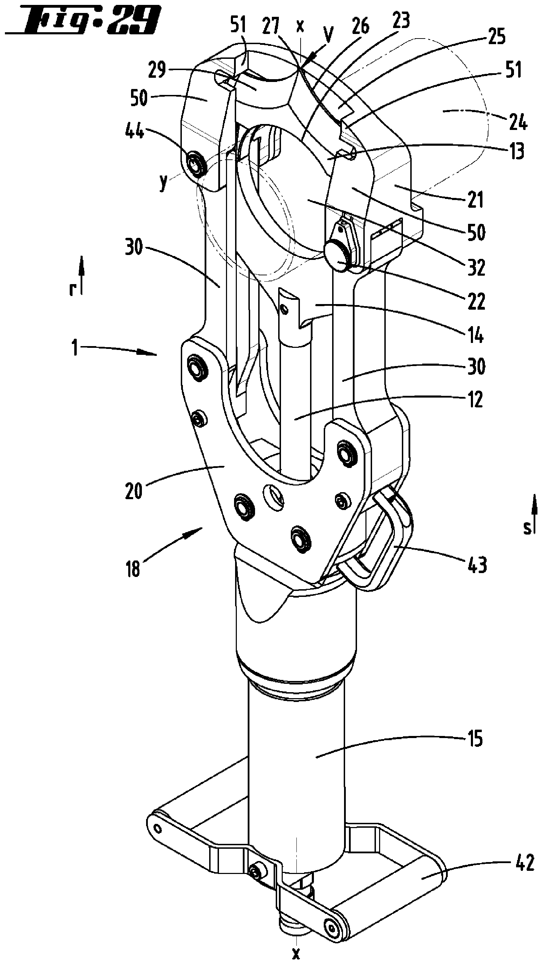

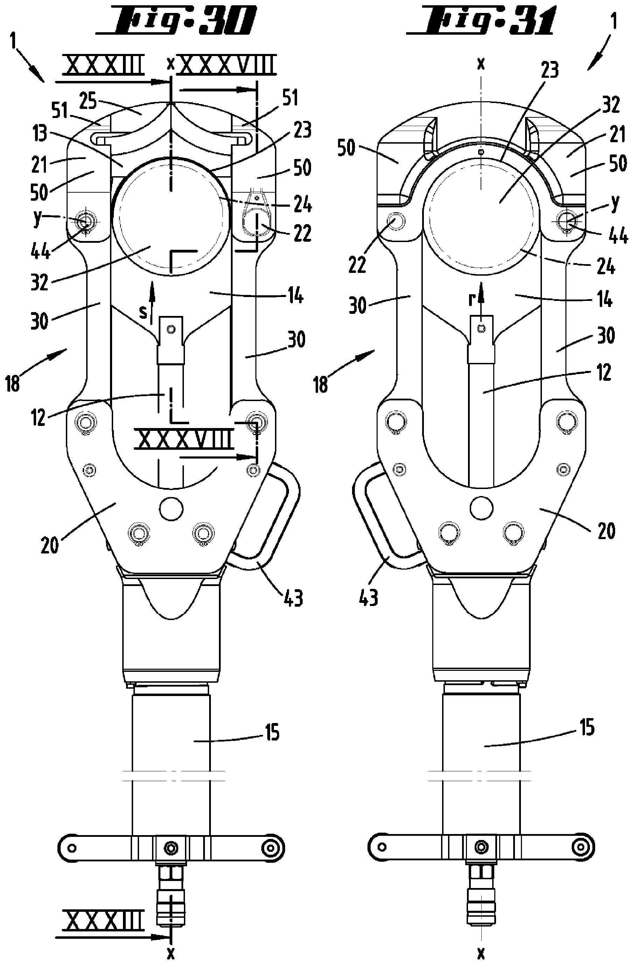

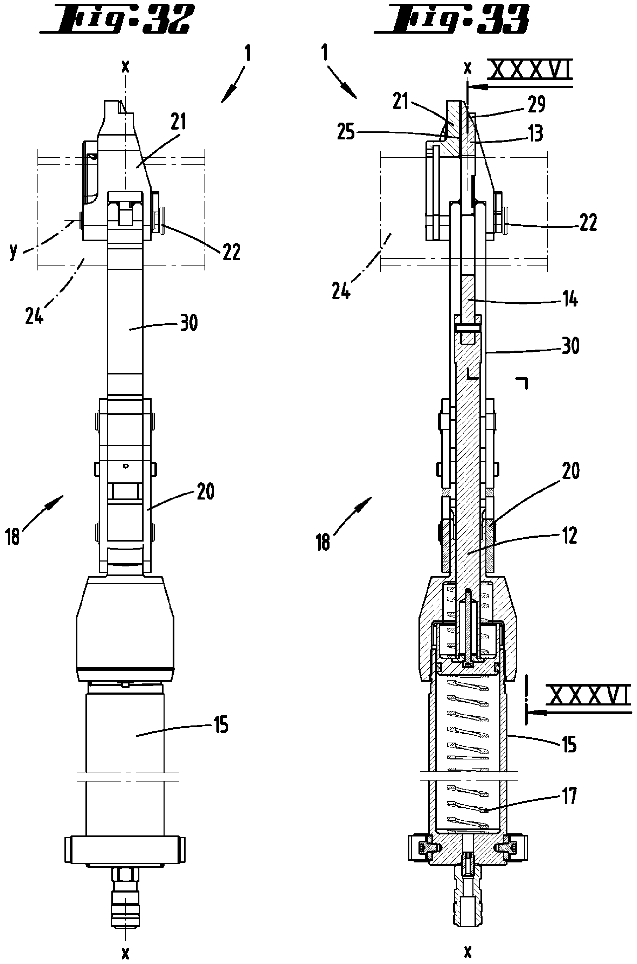

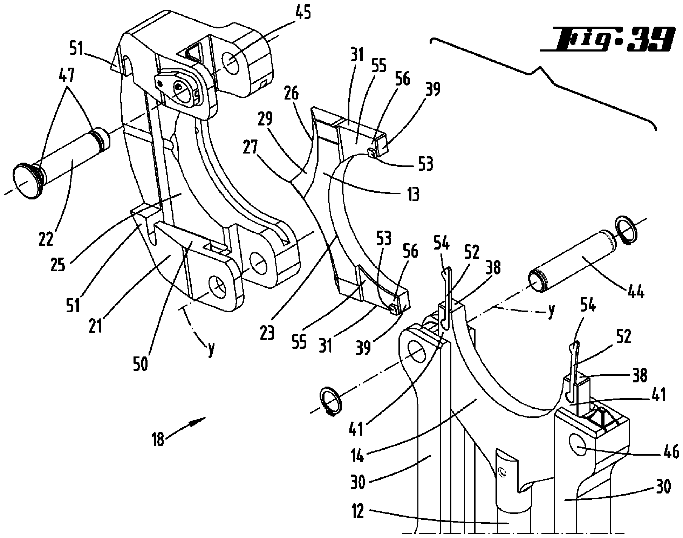

Die Figuren 29 bis 39 zeigen eine weitere Ausführungsform des Arbeitsgerätes 1.

Wie ersichtlich ist dieses Arbeitsgerät im Bereich des Zylinderabschnitts 15 zum Anschluss des Arbeitsgerätes 1 an ein Grundgerät 2 mit einem Handgriff 42 versehen. Ein weiterer Handgriff 43 ist im Bereich des Halterungsgrundteiles 20 angeordnet.

Das Halterungsgrundteil 20 trägt auch in dieser Ausführungsform beidseitig des in Verfahrrichtung r verlagerbaren Vorschubteils 40 Führungsteile 30. Diese sind mit Bezug auf einen Querschnitt quer zur Längserstreckung der Führungsteile 30 im Wesentlichen U-förmig gestaltet mit aufeinander zuweisenden U-Öffnungen. Zwischen diesen Führungsteilen 30 sind das über den Kolbenschaft 12 verlagerbare Vorschubteil 14 und die Schneide 13 linear geführt.

Endseitig der Führungsteile 30 ist auch hier ein bügelartiges Halterungsteil 21 angeordnet, welches im Wesentlichen die Aufnahmekontur 23 anbietet.

Das Halterungsteil 21 ist gegenüber dem Halterungsgrundteil 20 bzw. den fest an dem Halterungsgrundteil 20 angeordneten Führungsteilen 30 abschwenkbar gehaltert. Die diesbezügliche Schwenkachse y erstreckt sich auch in dieser Ausführungsform quergerichtet zur Mittellängsachse x und senkrecht zu dem zwischen Halterungsteil 21 und den Führungsteilen 30 aufgespannten Arbeitsraum 19.

Die Anlenkung erfolgt im Bereich eines von dem Halterungsgrundteil 20 abweisenden freien Endes eines Führungsteiles 30, wobei die Schwenkverbindung gegeben ist durch einen entsprechend positionierten Bolzen 44. Die so gegebene Schwenkverbindung ist bevorzugt betrieblich nicht aufhebbar.

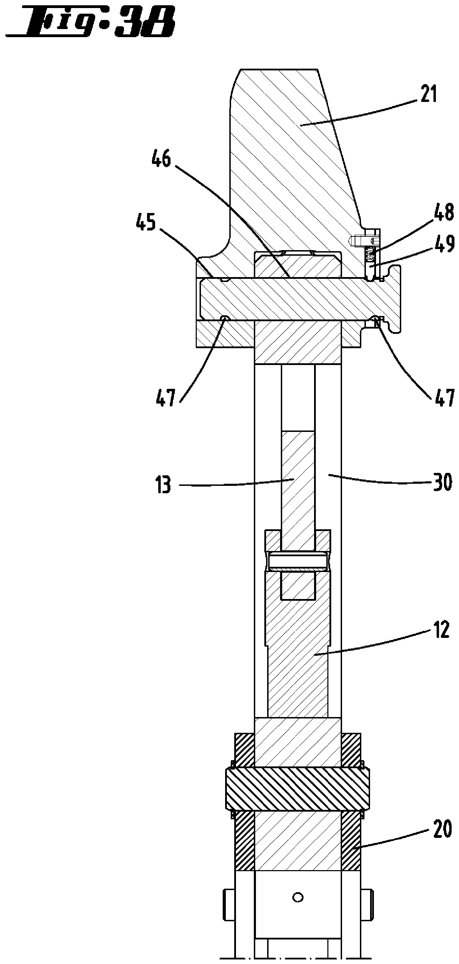

Gegenüberliegend zu dem Bolzen 44 ist das diesbezügliche Ende des Halterungsteiles 21 über einen weiteren Bolzen 22 an dem freien Ende des diesbezüglichen Führungsteils 30 festlegbar. Wie insbesondere aus der Schnittdarstellung in Fig. 38 zu erkennen, handelt es sich hierbei um einen rastfestlegbaren Bolzen 22, der zur Aufhebung der Verbindung zwischen Halterungsteil 21 und Führungsteil 30 in Richtung seiner Längserstreckung aus der diesbezüglichen Bohrung 45 in dem Halterungsteil 21 und der Bohrung 46 im Führungsteil 30 herausgezogen werden kann.

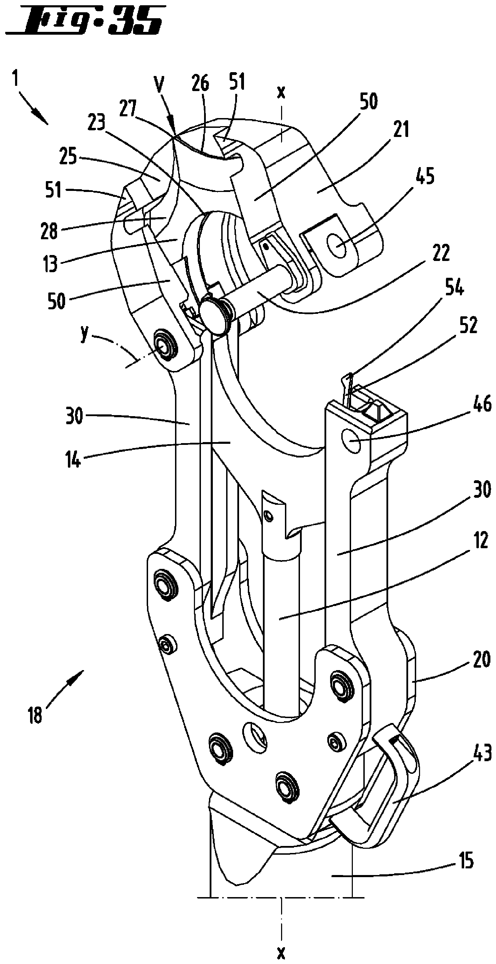

Sowohl die in Fig. 38 dargestellte Festlegungsstellung des Halterungsteils 21 als auch die bspw. in Fig. 35 dargestellte Losestellung zur Verschwenkung des Halterungsteils 21 ist jeweils bzgl. des Bolzens 22 rastfestlegbar. Hierzu weist der Bolzen 22 zwei in axialer Richtung desselben zueinander beabstandete Ringnuten 47 auf, in die je nach Endstellung des Bolzens 22 ein in dem Halterungsteil 21 aufgenommener und dort gegen eine Feder 48 wirkender Rastvorsprung 49 eintaucht.

Das Halterungsteil 21 ist im Wesentlichen in Verlängerung zu den Führungsteilen 30 des Halterungsgrundteiles 20 mit bevorzugt ebenfalls im Querschnitt im Wesentlichen U-förmigen Führungsabschnitten 50 versehen, die bei in Schneidrichtung s vorverlagerter Schneide 13 diese aufnehmen bzw. von dem die Führungsteile 30 aufweisenden Halterungsgrundteil 20 übernehmen. In der Schneidenendstellung gemäß den Darstellungen in den Figuren 29 bis 33 liegt die Schneide 13 bevorzugt vollständig in dem Halterungsteil 21 zwischen dessen Führungsabschnitten 50 ein. Die Schneidenendstellung kann anschlagbegrenzt sein, bspw. zufolge entsprechend ausgebildeter Anschlagrippen 51 endseitig der Führungsabschnitte 50.

Auch in dieser Ausführungsform verlagert das Vorschubteil 14 über dessen Stirnflächen 38 im Bereich der Gabelenden 41 die Schneide 13. Es liegt diesbezüglich eine vollständige Trennung von Schneide 13 und Vorschubteil 14 vor. Allein die Stirnflächen 38 und 39 von Vorschubteil 14 und Schneide 13 liegen insbesondere im Zuge des Verfahrens in Schneidrichtung s aneinander an.

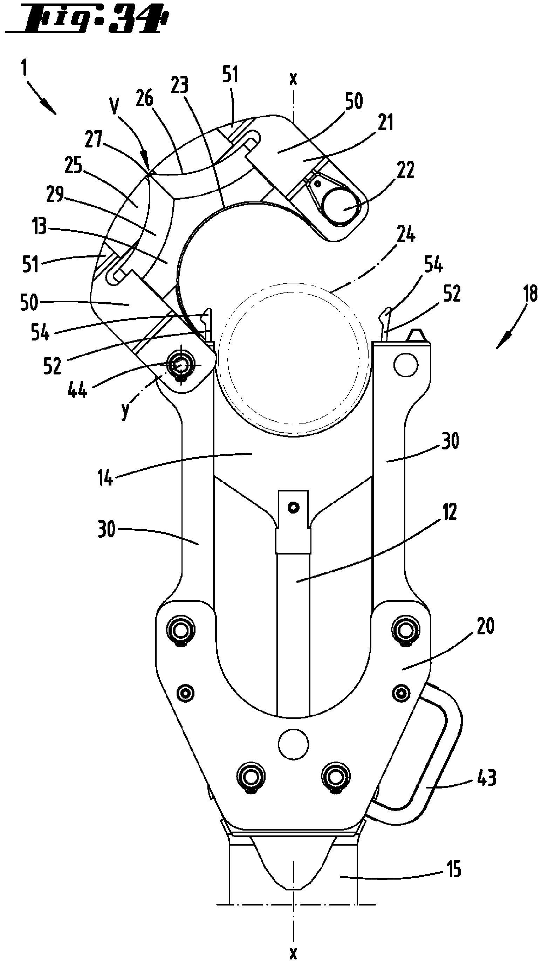

In der Schneidenendstellung kann das Halterungsteil 21 gemäß den Darstellungen in den Figuren 34 und 35 um die Schwenkachse y abgeschwenkt werden, dies unter weiterer Halterung der in dem Halterungsteil 21 aufgenommenen Schneide 13. Der Arbeitsraum 19 liegt hiernach bspw. zur Entnahme des Werkstücks 24 frei. Auch kann aus dieser Stellung heraus das Vorschubteil 14 zurückverlagert werden, dies entsprechend ohne Schleppmitnahme der Schneide 13.

Handhabungstechnisch günstiger ist eine automatische Mitschleppung der Schneide 13 aus der Schneidenendstellung heraus zurück in die Grundstellung. Diese Schleppmitnahme erfolgt über das Vorschubteil 14, welches gerätegesteuert zurückverlagert werden kann.

Um bspw. bei einer etwaigen Verklemmung im Bereich der Schneide 13 und des durchtrennten Werkstückes 24 einer Beschädigung des Arbeitsgerätes 1, insbesondere der Schneide 13, darüber hinaus aber auch des Werkstückes 24 vorzubeugen, ist diese Schleppmitnahme ausrastbar gestaltet, so dass bei Überschreiten einer vorgegebenen, auf die Rastverbindung einwirkenden Kraft diese auslöst, wonach das Vorschubteil 14 unter Aufhebung der Verbindung zu der Schneide 13 zurückverfährt und die Schneide 13 entsprechend gemäß dem beschriebenen Ausführungsbeispiel in dem Halterungsteil 21 verbleibt. Dieses kann wie vorbeschrieben zur Freilegung des Werkstückes 24 hiernach abgeschwenkt werden.

Die Rastverbindung ist gegeben zufolge der Anordnung eines Rastarmes 52 und eines Gegenrastmittels 53.

In dem dargestellten Ausführungsbeispiel ist mit Bezug auf einen Querschnitt, in welchem sich die Mittellängsachse x als Linie und die Schwenkachse y als Punkt darstellt, beidseitig der Mittellängsachse x im Bereich der diesbezüglichen Gabelenden 41 des Vorschubteiles 14 jeweils ein Rastarm 51 angebunden. Es kann sich hierbei um ein Kunststoffspritzteil handeln, welches in dem Vorschubteil 14 verankert ist. Alternativ kann der Rastarm 51 auch aus einem Federstahl oder dergleichen gebildet sein.

Der Rastarm 51 ragt über die Stirnfläche 38 des zugeordneten Gabelendes 41 frei hinaus und formt endseitig einen Rastvorsprung 54. In dem dargestellten Ausführungsbeispiel weisen die beiden Rastvorsprünge 54 beider Rastarme 51 in dieselbe Richtung. Alternativ können beide Rastvorsprünge 54 auch aufeinander zuweisend angeordnet sein oder weiter alternativ voneinander wegweisend.

Die Rastarme 51 ragen mit ihren Rastvorsprüngen 54 jeweils in einen taschenartigen Freiraum 55 der Schneide 13 ein, der eine Schwenkbeweglichkeit des jeweiligen Rastarmes 51 quer zu seiner Längserstreckung, weiter bevorzugt auch quer zu der Mittellängsachse x erlaubt. Eine solche Ausweichbewegung des Rastarmes 15 ist aufgrund des gewählten Materials des Rastarmes 51 elastisch rückstellfähig.

Im Bereich der schneidenseitigen Stirnfläche 39, die im Zuge der Vorschubbewegung in Schneidrichtung s in Anlage tritt zu der vorschubteilseitigen Stirnfläche 38, ist ein Durchbruch 56 für den Rastarm 51 vorgesehen. Dieser mündet entsprechend in den Freiraum 55.

Der zu dem Durchbruch 56 im Querschnitt benachbart verbleibende Bereich in der Stirnfläche 39 bildet das Gegen-Rastmittel 52.

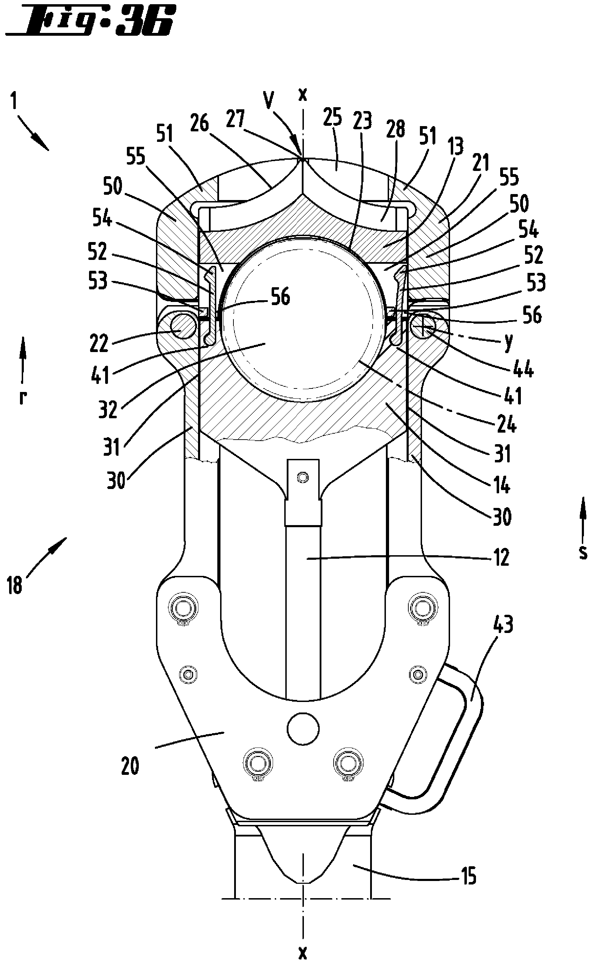

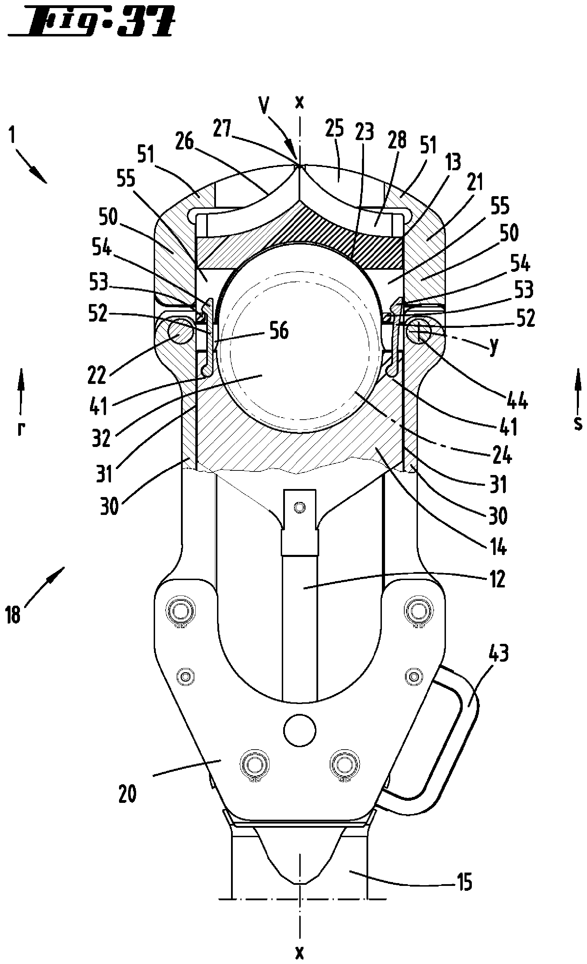

Aus der Scheidenendstellung beispielsweise gemäß Figur 36 heraus erfolgt, wie beschrieben, eine lineare Rückverlagerung des Vorschubteiles 14. Aufgrund der in Verlagerungsrichtung gegebenen Beabstandung zwischen Gegen-Rastmittel 53 der Schneide 13 und Rastvorsprung 54 des vorschubteilseitigen Rastarmes 51 ergibt sich hierbei zunächst eine Relativverlagerung des Vorschubteiles 14 gegenüber der Schneide 13, die zunächst nicht verlagert in dem Halterungsteil 21 verbleibt, bis die Rastvorsprünge 54 gegen die Gegen-Rastmittel 53 treten (vergleiche Figur 37). Das Vorschubteil 14 eilt in der Rückveranlagung entsprechend zunächst vor. In dieser Stellung ergibt sich eine Distanzierung von Schneide 13 und Vorschubteil 14 in Verlagerungsrichtung und somit eine zumindest in dieser Richtung betrachtete Vergrößerung der durch Vorschubteil 14 und Schneide 13 insgesamt gebildeten Öffnung 32, in welcher das Werkstück 24 gegebenenfalls noch teilweise eingreift. Allein diese Distanzierung kann ausreichend sein um eine gegebenenfalls vorhandene Verklemmung zwischen Werkstück 24 und Schneide 13 und / oder Vorschubteil 14 aufzuheben.

Zur Folge weiterer Rückverlagerung des Vorschubteiles 14 wird über die Rastarme 51 und die Gegen-Rastmittel 53 auch die Schneide 14 mitgeschleppt, sofern eine die Schneide 13 zurückhaltende Kraft, beispielsweise eine Klemmung im Bereich der Werkstückes 24, nicht so groß ist, dass die Rastverbindung aufgehoben wird. In diesem Fall gleiten die Rastvorsprünge 54 an den Gegen-Rastmitteln 53 unter entsprechende Ausschwenken der Rastarme 51 ab und vorbei, wonach die Rastverbindung aufgehoben ist. Das Vorschubteil 14 verfährt in diesem Fall allein zurück in die Grundstellung, während die Schneide 13 in dem Halterungsteil 21 verbleibt zur gesonderten Behandlung. So kann das Halterungsteil 21 mit der Schneide 13 abgeschwenkt werden.

Die Schneide 13 kann im Übrigen in der abgeschwenkten Stellung des Halterungsteiles 21 zu Reinigungs- oder Austauschzwecken aus dem Halterungsteil 21 entnommen werden. So kann die Schneide 13 beispielsweise ausgetauscht werden gegen eine Schneide ohne Spitze oder durch eine Schneide für insbesondere zum Schneiden von Kunststoffrohren oder dergleichen.

Die Raststellung zwischen Vorschubteil 14 und Schneide 13 ist im Übrigen selbsttätig auffindbar. Die Rastvorsprünge 54 sind geeignet um auch in Vorschubrichtung an den Gegen-Rastmitteln 53 vorbei auszuweichen und diese durch Eintauchen in den Freiraum 55 zu hinterfangen.

Auch kann aus der Raststellung gemäß Figur 36, ggfs. auch gemäß Figur 37, ein Abschwenken des Halterungsteiles 21 erfolgen. Im Zuge des Abschwenkens lenken die Rastarme 51 elastisch aus und tauchen abschließend durch die stirnflächenseitigen Durchbrüche 56 auf.

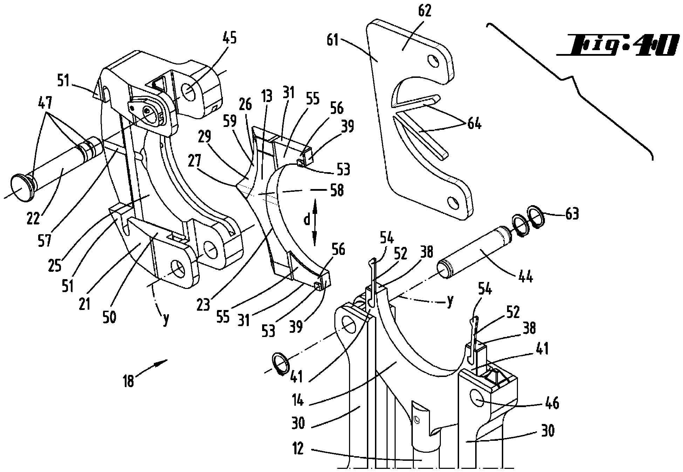

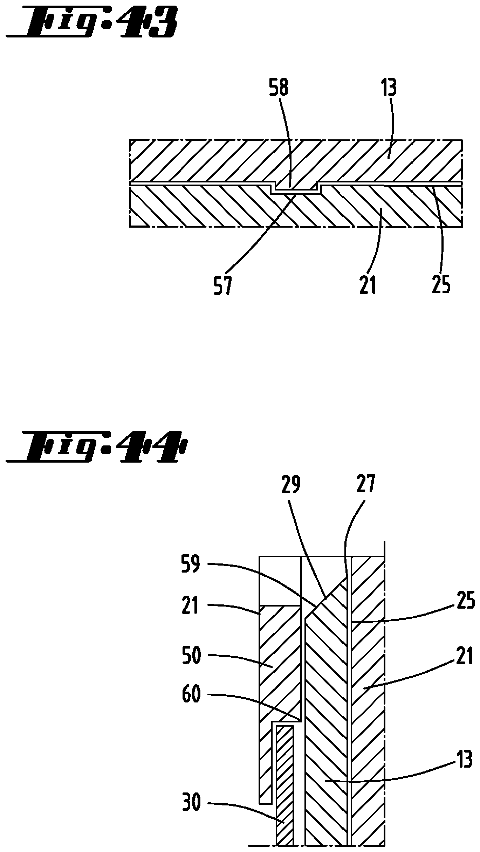

Im Bereich der halterungsteilseitigen Verfahrfläche 25 kann mittig ein Gegen-Führungsmittel 57 in Form einer Einsenkung bzw. Nut gegeben sein, zur Zusammenwirkung mit einem Führungsmittel 58 der Schneide 13. Dieses Führungsmittel 58 kann, wie bspw. in Figur 43 erkennbar, ein an den Querschnitt des Gegen-Führungsmittels 57 angepasster rippenartiger Vorsprung sein, der sich ausgehend von der Aufnahmekontur 43 bis hin zu einer gegebenenfalls ausgeformten Schneidenspitze 27 erstrecken kann (siehe auch Figur 40). Zur Folge dieser Ausgestaltung ist eine korrekte Ausrichtung der Schneide 13 im Zuge des Einfahrens in das Halterungsteil 21 gegeben, auch wenn es zuvor im Zuge des Schneidvorganges zu einer gewissen Auslenkung der Schneide 13 in Querrichtung zur Schneidrichtung s kommen sollte.

Darüber hinaus kann die Schneide 13, wie in Figur 44 dargestellt, ein Einweisermittel 59 aufweisen, das in dem dargestellten Ausführungsbeispiel auch durch den Schneidenabschnitt 29 gebildet sein kann. Das Einweisermittel 59 streckt sich quer zur Schneidrichtung s und auch quer zu einer Breitenrichtung d der Schneide 13 und wirkt insbesondere im Zuge der Verlagerung der Schneide 13 in Schneidrichtung s mit einem im Bereich des Führungsteiles 30 und / oder des Führungsabschnittes 50 ausgebildeten Gegen-Einweisermittel 60 zusammen. Das Gegen-Einweisermittel 60, bspw. in Form eines im Querschnitt gemäß Figur 44 betrachteten Vorsprungabschnittes, führt in Zusammenwirkung mit der auflaufschrägenartigen Ausbildung des Einweisermittels 59 zu einer korrekten Ausrichtung der Schneide 13 senkrecht zur Breitenrichtung d der Schneide 13, so dass diese in bevorzugter Ausgestaltung zur Anlage kommt an der Verfahrfläche 25 des Halterungsteiles 21. So kann eine ggfs. zuvor im Zuge des Schneidvorganges versetzte oder herausgedrückte Schneide 13 in geeigneter Weise in die taschenartige Aufnahme im Führungsabschnitt 50 eingeführt werden.

Wie weiter insbesondere aus den Darstellungen in den Figuren 40 bis 42 zu erkennen, kann dem Arbeitsgerät 1, hier bspw. dem Halterungsteil 21, ein Einweiserteil 61 zugeordnet werden. Ein solches Einweiserteil 61 kann zunächst als Loseteil vorliegen und kann so bei Bedarf anordbar sein.

Dabei kann das Einweiserteil 61 einen plattenförmigen Grundkörper 62 aufweisen, ggfs. mit einem an die Aufnahmekontur 23 angepassten Ausschnitt. Der Grundkörper kann in einem Bereich bspw. an dem Bolzen 44 anordbar sein, bspw. unter Nutzung eines weiteren Sicherungsrings 63 allein zur Festlegung des Einweiserteils 61.

Das andere Ende des Einweiserteils 61 kann an dem weiteren Bolzen 22 festgelegt sein.

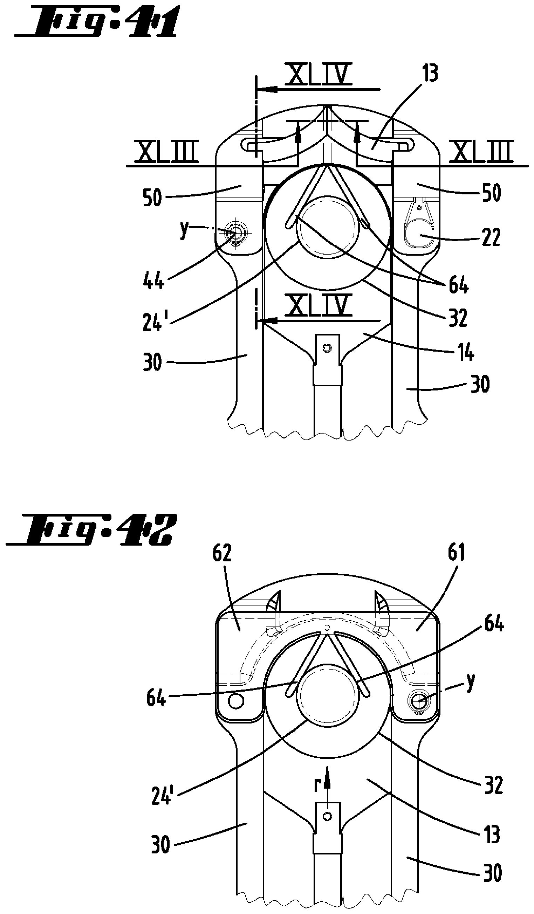

Ausgehend von dem an die Aufnahmenkontur 23 angepassten Ausschnitt erstrecken sich in diesen Ausschnitt hinein zwei im Wesentlichen V-förmig zueinander angeordnete Einweiserarme 64, die bei entsprechender Zuordnung des Einweiserteils 61 in die senkrecht zur Breitenrichtung d der Schneide 13 betrachtete Projektionsfläche der Öffnung 32 hineinragen (vergleiche Figuren 41 und 42). Hieraus ergibt sich in vorteilhafter Weise eine mittenzentrierte Abstützung auch für gegenüber der Ausbildung der Aufnahmekontur 23 durchmesserverringerte Werkstücke 24, wie bspw. durchmesserverringerter Rohre (siehe Werkstück 24' in Figur 42).

**Liste der Bezugszeichen**

| | | | |
|---|---|---|---|
| 1 | Arbeitsgerät | 28 | Unterfläche |
| 2 | Grundgerät | 29 | Abschnitt |
| 3 | Akkumulator | 30 | Führungsteil |
| 4 | Taster | 31 | Randkante |
| 5 | Handgriff | 32 | Öffnung |
| 6 | Handgriff | 33 | Schwenkbacke |
| 7 | Antriebsaggregat | 34 | Schwenkbacke |
| 8 | Hydraulikschlauch | 35 | Steuerlenker |
| 9 | Zylinder | 36 | Schwenkbolzen |
| 10 | Kolben | 37 | Ende |
| 11 | Radialdichtung | 38 | Stirnfläche |
| 12 | Kolbenschaft | 39 | Stirnfläche |
| 13 | Schneide | 40 | Gelenk |
| 14 | Vorschubteil | 41 | Gabelende |
| 15 | Zylinderabschnitt | 42 | Handgriff |
| 16 | Anschlagwandung | 43 | Handgriff |
| 17 | Druckfeder | 44 | Bolzen |
| 18 | Arbeitskopf | 45 | Bohrung |
| 19 | Arbeitsraum | 46 | Bohrung |
| 20 | Halterungsgrundteil | 47 | Ringnut |
| 21 | Halterungsteil | 48 | Feder |
| 22 | Bolzen | 49 | Rastvorsprung |
| 23 | Aufnahmekontur | 50 | Führungsabschnitt |
| 24 | Werkstück | 51 | Anschlagrippe |
| 24' | Werkstück | 52 | Rastarm |
| 25 | Verfahrfläche | 53 | Gegen-Rastmittel |
| 26 | Schneidkante | 54 | Rastvorsprung |
| 27 | Schneidenspitze | 55 | Freiraum |
| 56 | Durchbruch | | |
| 57 | Gegen-Führungsmittel | | |
| 58 | Führungsmittel | | |
| 59 | Einweisermittel | | |
| 60 | Gegen-Einweisermittel | | |
| 61 | Einweiserteil | | |
| 62 | Grundkörper | | |
| 63 | Sicherungsring | | |
| 64 | Einweiserarm | | |
| | | | |
| a | Kreisbogen | | |
| b | Zurückversetzungsmaß | | |
| c | Öffnungsmaß | | |
| d | Breitenrichtung | | |
| r | Verfahrrichtung | | |
| s | Schneidrichtung | | |
| x | Mittellängsachse | | |
| y | Schwenkachse | | |
| z | Schwenkachse | | |
| | | | |
| B | Berührungsbereich | | |
| F | Freiraum | | |
| K | konvexe Kontur | | |
| V | Vorsprungbereich | | |

## Patentansprüche

1. Arbeitsgerät (1) zum Schneiden eines Werkstücks (24), mit einem Arbeitskopf (18), wobei der Arbeitskopf (18) mit Bezug auf einen Grundriss einen im Wesentlichen bezüglich der Außenkontur rechteckförmigen Halterungsrahmen formt, zur Ausformung eines zumindest im Zuge des Schneidvorganges geschlossenen Arbeitsraumes (19), wobei der Arbeitskopf (18) eine Aufnahmekontur (23) aufweist, in welcher Aufnahmekontur (23) das Werkstück (24) aufnehmbar ist, wobei der Arbeitskopf (18) weiter eine bewegbare Schneide (13) aufweist mit einer Schneidkontur, wobei die Schneide (13) im Zuge eines Schneidvorganges die Aufnahmekontur (23) durchfährt, wobei weiter die Schneide (13) von einem Vorschubteil (14) beaufschlagbar ist und soweit in einer Schneidrichtung (s) bewegbar ist, dass ein aufgenommenes Werkstück (24) vollständig durchfahrbar ist, **dadurch gekennzeichnet, dass** ausgehend von einer zufolge des vollständigen Durchfahrens erreichten Stellung der Schneide (13) die Schneide (13) unter Entfernung von dem Vorschubteil (14) aus der Schneidrichtung (s) heraus bewegbar ist, wobei die Schneide (13) mit dem Vorschubteil (14) schwenkverbunden ist oder mittels eines Halterungsteils (21), das Teil des Halterungsrahmens ist, oder über eine Verbindung über ein Gelenk (40) mit dem Vorschubteil (14), relativ zu dem Vorschubteil (14) verschwenkbar ist, oder wobei die Schneide (13) unverlierbar über ein flexibles Band oder eine Kette an dem Vorschubteil (14) angebunden ist, wobei die Länge des Bandes oder der Kette die Entnahme der Schneide (13) ermöglicht.

2. Arbeitsgerät nach Anspruch 1, **dadurch gekennzeichnet, dass** die Schneide (13) ausgehend von der dem vollständigen Hindurchfahren entsprechenden Stellung aus dem Arbeitskopf (18) entnehmbar ist.

3. Arbeitsgerät nach einem der vorhergehenden Ansprüche, **dadurch gekennzeichnet, dass** die Schneide (13) relativ zu dem Vorschubteil (14) um eine senkrecht zu der Schneidrichtung (s) verlaufende Achse schwenkbar ist.

4. Arbeitsgerät nach einem der vorhergehenden Ansprüche, **dadurch gekennzeichnet, dass** das Vorschubteil (14) mit der Schneide (13) lösbar rastverbunden ist, wobei, bevorzugt, die Rastverbindung einen Rastarm (51) aufweist, der ohne Aufhebung der Rastverbindung eine Distanzierung des Vorschubteils (14) zu der Schneide (13) zulässt.

5. Arbeitsgerät nach Anspruch4, **dadurch gekennzeichnet, dass** bei einer Beaufschlagung der Schneide (13) durch das Vorschubteil (14) die Kraftübertragung über eine gesondert zu dem Rastarm (51) ausgebildete Anschlagfläche erfolgt und/oder dass zwei Rastarme (51) vorgesehen sind.

6. Arbeitsgerät nach Anspruch 5, **dadurch gekennzeichnet, dass** die Rastarme (51) bezüglich einer Öffnung der Aufnahmekontur (23) quer zu der Schneidrichtung (s) gegenüberliegend ausgebildet sind.

7. Arbeitsgerät nach einem der vorhergehenden Ansprüche, **dadurch gekennzeichnet, dass** die Schneide (13) zugeordnet einem bezogen auf eine Richtung quer zu der Schneidrichtung (s) gegebenen Mittelbereich ein Führungsmittel (58) aufweist, das mit einem Gegen-Führungsmittel (57) des Halterungsteils (21) zusammenwirken kann, und/ oder, bevorzugt, dass die Schneide (13) quer zu der Schneidrichtung (s) und bezogen auf eine Breite der Schneide (13) auch quer zu der Breitenrichtung (d) der Schneide (13) ein Einweisermittel (59) aufweist, das mit einem Gegen-Einweisermittel (60) des Halterungsteils (21) zusammenwirken kann, und/oder, bevorzugt, dass an dem Halterungsteil (21) ein Einweiserteil (61) befestigbar ist, zur Ausrichtung von Werkstücken (24, 24') kleinerer Durchmesser.

8. Arbeitsgerät (1) nach einem der vorhergehenden Ansprüche, **dadurch gekennzeichnet, dass** das Vorschubteil (14) gabelförmig gestaltet ist, mit zwei außerhalb eines Schneidbereiches der Schneide (13) auf die Schneide (13) einwirkenden Gabelenden (41).

9. Arbeitsgerät (1) nach einem der vorhergehenden Ansprüche, **dadurch gekennzeichnet, dass** die Aufnahmekontur (23) an einem Halterungsteil (21) ausgebildet ist, das, bezogen auf einen Querschnitt, in Nebeneinanderanordnung zu der Schneide (13) ausgebildet ist, wobei, bevorzugt, das Halterungsteil (21) eine der Schneide (13) zugewandte Verfahrfläche (25) ausbildet, auf welcher die Schneide (13) seitlich aufliegend sich relativ zu dem Halterungsteil (21) bewegt, und/oder, bevorzugt, dass die Schneide (13) relativ zu dem Halterungsteil (21) soweit bewegbar ist, bis ein oder mehrere Freiräume (F) vollständig geschlossen sind.

10. Arbeitsgerät (1) nach einem der vorhergehenden Ansprüche, **dadurch gekennzeichnet, dass** der Halterungsrahmen durch ein im Grundriss U-förmig oder gabelförmig gestaltetes Halterungsteil (21) gegeben ist, das im Bereich eines Gabelendes schwenkbar an Halterungsgrundteilen (20) befestigt ist, wobei die diesbezügliche Schwenkachse (y) senkrecht zu einer Mittellängsachse (x) verläuft.

11. Arbeitsgerät (1) nach Anspruch 10, **dadurch gekennzeichnet, dass** auf einer Verfahrfläche (25) des Halterungsteils (21) in Breitenrichtung jenseits einer Randkanteder Schneide (13) ein- oder beidseitigen ein Führungsteil (20) angeordnet ist, zur U-förmigen Umfassung eines Randbereiches der Schneide (13).

12. Arbeitsgerät (1) nach einem der Ansprüche 10 oder 11, **dadurch gekennzeichnet, dass** das Halterungsteil (21) zur Aufnahme eines Werkstückes (24) aufklappbar ist.

13. Arbeitsgerät (1) nach einem der vorhergehenden Ansprüche, **dadurch gekennzeichnet, dass** die Schneide (13) eine oder mehrere Schneidenspitzen (27) aufweist.

14. Arbeitsgerät nach Anspruch 13, **dadurch gekennzeichnet dass** die eine oder mehreren Schneidenspitzen (27) symmetrisch zu einer durch den Mittelpunkt der Aufnahmekontur (23) gehenden Verfahrlinie der Schneide (13) ausgebildet sind.

15. Arbeitsgerät (1) nach einem der Ansprüche 13 oder 14, **dadurch gekennzeichnet, dass** die Schneide (13) in einem Längsquerschnitt durch die Schneidenspitze (27) einseitig von einer ebenen Unterfläche (28) ausgehend einen keilförmigen Abschnitt (29) aufweist.

## Claims

1. A tool (1) for cutting a workpiece (24), comprising a tool head (18), wherein the tool head (18) forming, with reference to a plan view, a holding frame which is essentially rectangular with respect to the outer contour, for forming a workspace (19) which is closed at least in the course of the cutting operation, the tool head (18) having a receiving contour (23), in which receiving contour (23) the workpiece (24) can be received, the tool head (18) furthermore having a movable cutting edge (13) with a cutting contour, the cutting edge (13) passing through the receiving contour (23) in the course of a cutting operation, it furthermore being possible for the cutting edge (13) to be acted upon by an advancement part (14) and to be moved in a cutting direction (s) to that extent, in that a received workpiece (24) can be completely traversed, **characterized in that**, starting from a position of the cutting edge (13) reached as a result of the complete traversing, the cutting edge (13) can be moved out of the cutting direction (s) while being moved away from the advancement part (14), the cutting edge (13) being pivotally connected to the advancement part (14) or by means of a holding part (21), which is part of the holder frame, or by means of a connection via a joint (40) to the advancement part (14), relative to the advancement part (14), or wherein the cutting edge (13) is captively connected to the advancement part (14) via a flexible band or chain, the length of the band or chain enabling the removal of the cutting edge (13).

2. The tool according to claim 1, **characterised in that** the cutting edge (13) is removable from the tool head (18) starting from the position corresponding to complete passage.

3. The tool according to one of the preceding claims, **characterised in that** the cutting edge (13) is pivotable relative to the advancement part (14) about an axis running perpendicular to the cutting direction (s).

4. The tool according to one of the preceding claims, **characterised in that** the advancement part (14) is connected to the cutting edge (13) by means of locking in a releasable manner, wherein, preferably, the locking connection has a locking arm (51), which allows for a distancing of the advancement part (14) to the cutting edge (13) without releasing the locking connection.

5. The tool according to claim 4, **characterised in that**, when the cutting edge (13) is acted upon by the advancement part (14), the force transmission takes place via a stop surface formed separately from the locking arm (51) and/or **in that** two locking arms (51) are provided.

6. The tool according to claim 5, **characterised in that** the locking arms (51) are formed opposite each other with respect to an opening of the receiving contour (23) transverse to the cutting direction (s).

7. The tool according to one of the preceding claims, **characterised in that** the cutting edge (13) has, associated with a central region given with respect to a direction transverse to the cutting direction (s), a guide means (58) which can cooperate with a counter-guide means (57) of the holding part (21), and/or, preferably, **in that** the cutting edge (13) has, transversely with respect to the cutting direction (s) and, with respect to a width of the cutting edge (13), also transversely with respect to the width direction (d) of the cutting edge (13), a guide means (59) which can cooperate with a counter-guide means (60) of the holder part (21), and/or, preferably, **in that** a positioning part (61) can be fastened to the holder part (21) for aligning workpieces (24, 24') of smaller diameter.

8. The tool (1) according to one of the preceding claims, **characterised in that** the advancement part (14) is fork-shaped, with two fork ends (41) acting on the cutting edge (13) outside a cutting area of the cutting edge (13).

9. The tool (1) according to one of the preceding claims, **characterised in that** the receiving contour (23) is formed on a holding part (21) which, with respect to a cross-section, is formed in juxtaposition to the cutting edge (13), wherein, preferably, the holding part (21) forms a traversing surface (25) which faces the cutting edge (13) and on which the cutting edge (13), resting laterally, moves relative to the holding part (21), and/or, preferably, **in that** the cutting edge (13) can be moved relative to the holding part (21) until one or more clearance (F) are completely closed.

10. The tool (1) according to one of the preceding claims, **characterised in that** the holding frame is provided by means of a holding part (21), the outline of which is designed in a U-shaped or forked-shaped manner and which is pivotably fastened to the base holding parts (20) in the region of a fork end, wherein the corresponding pivot axis (y) runs perpendicular to the central longitudinal axis (x).

11. The tool (1) according to claim 10, **characterised in that in that** a guide part (20) is arranged on one side or on both sides on a traversing surface (25) of the holding part (21) in the width direction on the other side of an outer edge of the cutting edge (13) for the U-shaped enclosure of an edge region of the cutting edge (13).

12. The tool (1) according to one of claims 10 or 11, **characterised in that** the holding part (21) can be folded open for receiving a workpiece (24).

13. The tool (1) according to one of the preceding claims, **characterised in that** the cutting edge (13) has one or a plurality of cutting edge tips (27).

14. The tool according to claim 13, **characterised in that** the one or more cutting tips (27) are formed symmetrically with respect to a line of travel of the cutting edge (13) passing through the centre point of the receiving contour (23).

15. The tool (1) according to one of claims 13 or 14, **characterised in that** in a longitudinal cross section through the cutting edge tip (27), the cutting edge (13) has a wedge-shaped section (29), originating from a planar lower surface (28) on one side.

## Revendications

1. Outil de travail (1) pour découper une pièce (24), avec une tête de travail (18), la tête de travail (18) formant, par rapport à un plan, un cadre de fixation essentiellement rectangulaire par rapport au contour extérieur, pour former un espace de travail (19) fermé au moins au cours de l'opération de coupe, la tête de travail (18) présentant un contour de réception (23), dans lequel contour de réception (23) la pièce à usiner (24) peut être reçue, la tête de travail (18) présentant en outre un tranchant mobile (13) avec un contour de coupe, le tranchant (13) traversant le contour de réception (23) au cours d'une opération de coupe, le tranchant (13) pouvant en outre être sollicité par une pièce d'avance (14) et étant mobile dans une direction de coupe (s), en ce qu'une pièce à usiner (24) reçue peut être traversée complètement, **caractérisé en ce qu'**à partir d'une position du tranchant (13) atteinte suite à la traversée complète, le tranchant (13) peut être déplacé hors de la direction de coupe (s) en s'éloignant de la partie d'avance (14), le tranchant (13) étant relié de manière pivotante à la partie d'avance (14) ou au moyen d'une partie de support (21), qui fait partie du cadre de support, ou par une liaison par l'intermédiaire d'une articulation (40) avec la partie d'avance (14), peut pivoter par rapport à la partie d'avance (14), ou dans lequel le tranchant (13) est relié de manière imperdable à la partie d'avance (14) par l'intermédiaire d'une bande flexible ou d'une chaîne, la longueur de la bande ou de la chaîne permettant le retrait du tranchant (13).

2. Outil de travail selon la revendication 1, **caractérisé en ce que** le tranchant (13) peut être retiré de la tête de travail (18) à partir de la position correspondant au passage complet.

3. Outil de travail selon l'une des revendications précédentes, **caractérisé en ce que** le tranchant (13) peut pivoter par rapport à la partie d'avance (14) autour d'un axe perpendiculaire à la direction de coupe (s).

4. Outil de travail selon l'une des revendications précédentes, **caractérisé en ce que** la partie d'avance (14) est reliée par encliquetage de manière amovible au tranchant (13), la liaison par encliquetage présentant, de préférence, un bras d'encliquetage (51) qui permet un écartement de la partie d'avance (14) par rapport au tranchant (13) sans supprimer la liaison par encliquetage.

5. Outil de travail selon la revendication 4, **caractérisé en ce que**, lors d'une sollicitation du tranchant (13) par la pièce d'avance (14), la transmission de force s'effectue par l'intermédiaire d'une surface de butée réalisée séparément du bras d'encliquetage (51) et/ou **en ce que** deux bras d'encliquetage (51) sont prévus.

6. Outil de travail selon la revendication 5, **caractérisé en ce que** les bras d'encliquetage (51) sont réalisés de manière opposée par rapport à une ouverture du contour de réception (23) transversalement à la direction de coupe (s).

7. Outil de travail selon l'une des revendications précédentes, **caractérisé en ce que** le tranchant (13) comporte, associé à une zone centrale donnée par rapport à une direction transversale à la direction de coupe (s), un moyen de guidage (58) apte à coopérer avec un moyen de contre-guidage (57) de la pièce de support (21), et/ou, de préférence, **en ce que** le tranchant (13) présente, transversalement à la direction de coupe (s) et, par rapport à une largeur du tranchant (13), également transversalement à la direction de largeur (d) du tranchant (13), un moyen d'orientation (59) qui peut coopérer avec un moyen de contre-orientation (60) de la partie de support (21), et/ou, de préférence, **en ce qu'**une partie d'orientation (61) peut être fixée sur la partie de support (21), pour l'orientation de pièces (24, 24') de plus petit diamètre.

8. Outil de travail (1) selon l'une des revendications précédentes, **caractérisé en ce que** la partie d'avance (14) est en forme de fourche, avec deux extrémités de fourche (41) agissant sur le tranchant (13) en dehors d'une zone de coupe du tranchant (13).

9. Outil de travail (1) selon l'une des revendications précédentes, **caractérisé en ce que** le contour de réception (23) est formé sur une partie de support (21) qui, par rapport à une section transversale, est réalisée en juxtaposition avec le tranchant (13), de préférence, la pièce de fixation (21) forme une surface de déplacement (25) tournée vers le tranchant (13), sur laquelle le tranchant (13), reposant latéralement, se déplace par rapport à la pièce de fixation (21), et/ou, de préférence, le tranchant (13) peut être déplacé par rapport à la pièce de fixation (21) jusqu'à ce qu'un ou plusieurs espaces libres (F) soient complètement fermés.

10. Outil de travail (1) selon l'une des revendications précédentes, **caractérisé en ce que** le cadre de support est donné par une pièce de support (21) en forme de U ou de fourche en plan, qui est fixée de manière pivotante à des pièces de base de support (20) dans la zone d'une extrémité de fourche, l'axe de pivotement (y) correspondant s'étendant perpendiculairement à un axe longitudinal central (x).

11. Outil de travail (1) selon la revendication 10, **caractérisé en ce qu'**une pièce de guidage (20) est disposée d'un côté ou des deux côtés sur une surface de déplacement (25) de la pièce de fixation (21) dans le sens de la largeur, au-delà d'une arête de bord du tranchant (13), pour entourer en forme de U une zone de bord du tranchant (13).

12. Outil de travail (1) selon l'une des revendications 10 ou 11, **caractérisé en ce que** la partie de support (21) est rabattable pour recevoir une pièce (24).

13. Outil de travail (1) selon l'une des revendications précédentes, **caractérisé en ce que** le tranchant (13) présente une ou plusieurs pointes de coupe (27).

14. Outil de travail selon la revendication 13, **caractérisé en ce que** l'une ou plusieurs pointes de coupe (27) sont réalisées symétriquement par rapport à une ligne de déplacement de la coupe (13) passant par le centre du contour de réception (23).

15. Outil de travail (1) selon l'une des revendications 13 ou 14, **caractérisé en ce que** le tranchant (13) présente, dans une section longitudinale passant par la pointe du tranchant (27), une section en forme de coin (29) d'un côté partant d'une surface inférieure plane (28).
